(19) Europäisches Patentamt
European Patent Office
Office européen des brevets

(11) **EP 4 564 376 A1**

(12) **EUROPEAN PATENT APPLICATION**
published in accordance with Art. 153(4) EPC

(43) Date of publication:
**04.06.2025 Bulletin 2025/23**

(21) Application number: **23846441.6**

(22) Date of filing: **24.07.2023**

(51) International Patent Classification (IPC):
**H01B 13/00** (2006.01)    **C01B 25/14** (2006.01)
**H01M 10/0562** (2010.01)

(52) Cooperative Patent Classification (CPC):
**C01B 25/14; H01B 13/00; H01M 10/0562;**
**Y02E 60/10**

(86) International application number:
**PCT/JP2023/026953**

(87) International publication number:
**WO 2024/024711 (01.02.2024 Gazette 2024/05)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.07.2022 JP 2022121699**

(71) Applicant: **Idemitsu Kosan Co.,Ltd.**
**Tokyo 100-8321 (JP)**

(72) Inventors:
• **YAMAKI Taro**
**Tokyo 100-8321 (JP)**

• **KAMBARA Takayoshi**
**Tokyo 100-8321 (JP)**
• **TOTSUKA Shota**
**Tokyo 100-8321 (JP)**
• **KIJIMA Shunsuke**
**Tokyo 100-8321 (JP)**
• **IWAI Toyohiko**
**Tokyo 100-8321 (JP)**

(74) Representative: **Vossius & Partner**
**Patentanwälte Rechtsanwälte mbB**
**Siebertstrasse 3**
**81675 München (DE)**

(54) **METHOD FOR PRODUCING SOLID ELECTROLYTE, AND SOLID ELECTROLYTE**

(57) Provided is a method for producing a solid electrolyte, the method including mixing a raw material-containing substance that contains a lithium atom, a phosphorus atom, and a sulfur atom with a solvent to prepare a solution of an intermediate (1), and spraying the intermediate (1) solution using a spray drying apparatus, or spraying the intermediate (1) solution using a spray drying apparatus at a spraying pressure of the spray drying apparatus of 0.01 MPa or more, as method for producing a solid electrolyte, superior in the productivity and giving a sharp particle size distribution, a small median size ($D_{50}$), and a superior ionic conductivity. Also provided is a solid electrolyte having a prescribed median size ($D_{50}$) and particle size distribution.

[Fig. 1]

EP 4 564 376 A1

## Description

Technical Field

The present invention relates to a method for producing a solid electrolyte and a solid electrolyte.

Background Art

With rapid spread of information-related devices, communication devices, and so on, such as personal computers, video cameras, and mobile phones, in recent years, development of batteries that are utilized as a power source therefor is considered to be important. Heretofore, in batteries to be used for such an application, an electrolytic solution containing a flammable organic solvent has been used. However, development of a battery having a solid electrolyte layer in place of an electrolytic solution is being made in view of the fact that by making the battery fully solid, simplification of a safety unit can be achieved without using a flammable organic solvent within the battery and the battery is excellent in manufacturing costs and productivity.

A pulverization apparatus, such as a bead mill, is used for synthesizing a solid electrolyte used in a solid electrolyte layer or for controlling a particle size. Thus, by using a pulverizer, the production process is to include multiple steps and the production cost has increased. A possibility of providing a production method without using a pulverization apparatus has hitherto been seen, for example, by improving the synthesis process to apply a so-called solution synthesis in which a solid electrolyte is synthesized in a solution. However, a pulverization apparatus is still necessary for controlling the particle size of a solid electrolyte, and improvement of productivity is desired.

In a solid electrolyte, it is desired to control the particle size of the solid electrolyte (to sharpen the particle size distribution of the solid electrolyte and decrease the median size ($D_{50}$) thereof) according to the use purpose. A solid electrolyte can be used for a positive electrode, a negative electrode, and a solid electrolyte layer of an all-solid-state battery, and in the electrodes (positive electrode, negative electrode), a solid electrolyte is used in combination with an electrode active material (positive electrode active material, negative electrode active material). Since each of the solid electrolyte and the electrode active materials is a solid electrolyte, if the particle size distribution of the solid electrolyte can be sharpened and the median size ($D_{50}$) can be decreased, the contact interface between the electrode active material and the solid electrolyte is likely to be formed, the ionic and electronic conduction paths are better. As a result, a superior battery performance can be achieved.

For example, a method is known in which raw materials, such as lithium sulfide, are dissolved in a good solvent to prepare a solution, which is sprayed into a poor solvent to combine two or more raw material components including lithium and the like and produce fine particles that show low crystal growth (PTL 1).

PTL 2 discloses a method for producing a solid electrolyte, the method including supplying a solid electrolyte raw material-containing liquid to a medium that is liquid or gas at a temperature higher than the boiling point of the solvent to volatile the solvent and at the same time, reacting the solid electrolyte raw materials to precipitate an argyrodite-type crystal structure.

Citation List

Patent Literature

PTL 1: JP 2017-18872 A
PTL 2: JP 2019-169459 A

Summary of Invention

Technical Problem

The present invention has been made in view of the above circumstance, and has an object to provide a solid electrolyte that is superior in productivity, has a sharp particle size distribution and a small median size ($D_{50}$), and is superior in ionic conductivity.

Solution to Problem

The method for producing a solid electrolyte according to the present invention is a method for producing a solid electrolyte, including mixing a raw material-containing substance that contains a lithium atom, a phosphorus atom, and a sulfur atom with a solvent to prepare a solution of an intermediate (1), and spraying the intermediate (1) solution using a spray drying apparatus at a spraying pressure of the spray drying apparatus of 0.01 MPa or more.

The method for producing a solid electrolyte according to the present invention is a method for producing a solid electrolyte, the method including mixing a raw material-containing substance that contains a lithium atom, a phosphorus atom, and a sulfur atom with a solvent to prepare a solution of an intermediate (1), and spraying the intermediate (1) solution using a spray drying apparatus.

The solid electrolyte according to the present invention is a solid electrolyte having a median size ($D_{50}$) of 1.0 $\mu$m or more and less than 9.0 $\mu$m and a particle size distribution (($D_{90}$-$D_{10}$)/$D_{50}$) based on the median size ($D_{50}$) and a particle size at a cumulative volume of 10% ($D_{10}$) and a particle size at a cumulative volume of 90% ($D_{90}$) of 2.50 or less.

Advantageous Effects of Invention

According to the present invention, it is possible to provide a solid electrolyte that is superior in productivity, has a sharp particle size distribution and a small median size ($D_{50}$), and is superior in ionic conductivity.

Brief Description of Drawings

Fig. 1 is a flow chart for explaining an example of a preferred form of a production method of this embodiment.
Fig. 2 is particle size distributions of a solid electrolyte (1) obtained in Example 1, a solid electrolyte (2) obtained in Example 2, and a solid electrolyte (C1) obtained in Comparative Example 1.

Description of Embodiments

An embodiment of the present invention (hereinafter sometimes referred to as "this embodiment") will be described below. In the present description, the upper limit values and the lower limit values for numerical ranges accompanied with "or more", "or less", and "to" are numerical values that can be arbitrarily combined, and the numerical values in Examples can be used as an upper limit value and a lower limit value. Any definition that is said to be preferred can be arbitrarily adopted. In other words, a definition that is said to be preferred can be adopted in combination with another definition or two or more other definitions that are said to be preferred. A combination of preferred definitions is more preferred.

(Findings that the present inventors have acquired to achieve the present invention)

As a result of intensive and extensive studies for solving the above problems, the present inventors have found the following matters, thus completing the present invention.

In the production method disclosed in PTL 1, since a product is obtained in a precipitated state in a poor solvent used, it is necessary to subsequently remove the poor solvent and perform drying. Since removal of the poor solvent and the like are thus required, the production process is cumbersome. In addition, contact between particles occurring in the step of the poor solvent removal and drying has caused an increase in the particle size, leading to an increase in the median size of the particles.

In PTL 2, a production method in which a solid electrolyte that contains an argyrodite-type crystal structure is precipitated is described as Examples. A method in which a solid electrolyte raw material-containing liquid (solvent, pyridine) is treated using a micro-mist spray drying apparatus is described in Example 5. However, when pyridine is used as a solvent like in the production method of Example 5, since a solid electrolyte is hardly dissolved in pyridine, the solid electrolyte raw material-containing liquid is a slurry. Thus, this case is different from the production method of this embodiment in which a solid electrolyte raw material-containing liquid is sprayed as a solution. In the case of being sprayed as a slurry, a large median size of the solid electrolyte contained in the slurry leads to a large median size of the solid electrolyte produced, and a particle size distribution that is not sharp of the solid electrolyte contained in the slurry result in a particle size distribution that is not sharp of the solid electrolyte produced. Thus, the properties of the solid electrolyte produced are affected by the properties of the solid electrolyte contained in the slurry.

In addition, in PTL 2, since the spraying pressure of the micro-mist spray drying apparatus is not optimized and for other reasons, the resulting solid electrolyte has a $D_{50}$ value as large as 9 $\mu$m.

Furthermore, in the method described in Example 5 of PTL 2, there has been room for improvement also in the productivity, for example, in that the spray port is clogged with the solid electrolyte contained in the slurry in spraying.

As described above, when the particle size distribution of the solid electrolyte can be sharpened and the median

size ($D_{50}$) thereof can be decreased, a contact interface between an electrode active material and the solid electrolyte is likely to be formed, the ionic and electronic conduction paths are better. As a result, a superior battery performance can be achieved. However, in the methods disclosed in PTLs 1 and 2, a sufficiently small particle size has not been able to be achieved.

The present inventors have focused on use of an intermediate (1) as a solution, use of a spray drying apparatus for drying in removing the solvent from the intermediate (1) solution, and the spraying pressure of the spray drying apparatus. The present inventors have found that a solid electrolyte, which is produced by using a solution of an intermediate (1) to be described later in producing the solid electrolyte and removing the solvent contained in the intermediate (1) solution by drying at a spraying pressure of the spray drying apparatus of 0.01 MPa or more, or by spraying a solution of an intermediate (1) to be described later using a spray drying apparatus and removing the solvent contained in the intermediate (1) solution by drying, has a sharp particle size distribution and a small median size ($D_{50}$), and furthermore, is superior in ionic conductivity. Based on the findings, the present inventors have achieved the following configuration of the production method of this embodiment. The production method of the present invention makes it possible to simultaneously remove the solvent by drying while controlling the particle size of the solid electrolyte (sharpening the particle size distribution and decreasing the median size ($D_{50}$)), and thus, can be said to be superior in the productivity. The solid electrolyte of the present invention is not particular limited on a method of producing the solid electrolyte. The solid electrolyte of the present invention can be easily produced, for example, by the production method of the present invention, and has a sharp particle size distribution and a small median size (D50).

(Various forms of this embodiment)

Methods for producing a solid electrolyte according to a first to thirteenth aspect of this embodiment, and solid electrolytes according to a fourteenth to sixteenth aspect of this embodiment will be described below.

A method for producing a solid electrolyte according to a first aspect of this embodiment is a method for producing a solid electrolyte, including

mixing a raw material-containing substance that contains a lithium atom, a phosphorus atom, and a sulfur atom with a solvent to prepare a solution of an intermediate (1), and

spraying the intermediate (1) solution using a spray drying apparatus at a spraying pressure of the spray drying apparatus of 0.01 MPa or more.

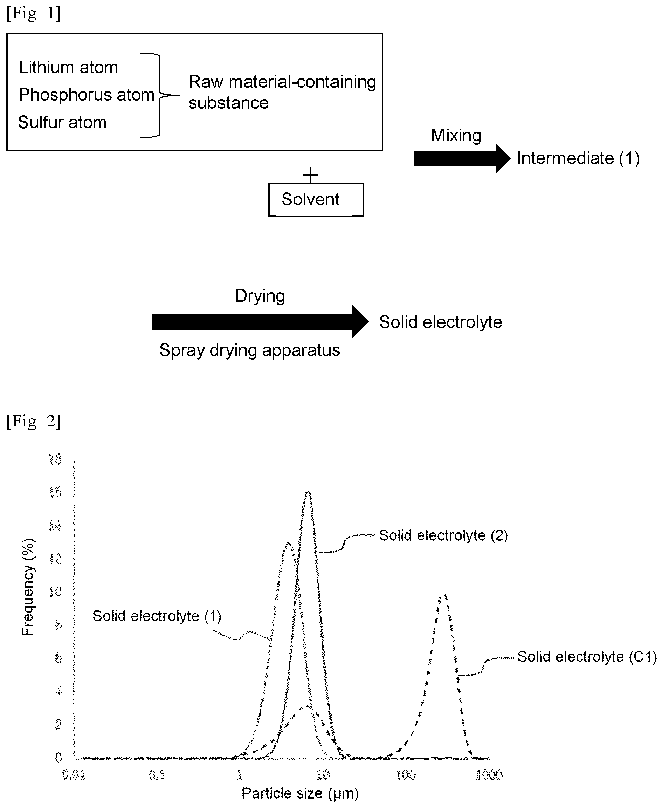

Fig. 1 shows a flow chart for explaining a preferred form of the method for producing a solid electrolyte of this embodiment. In the production method of this embodiment, a solution of an intermediate (1) is sprayed using a spray drying apparatus and a solvent is removed from the intermediate (1) solution, whereby removal of the solvent and control of the particle size of the solid electrolyte can be simultaneously achieved. Accordingly, the method for producing a solid electrolyte of this embodiment can be said to be a production method superior in productivity.

In addition, since the obtained solid electrolyte has a sharp particle size distribution and a small median size ($D_{50}$), as described above, a contact interface between an electrode active material and the solid electrolyte is likely to be formed, the ionic and electronic conduction paths are better. In addition to that, since the obtained solid electrolyte is superior in ionic conductivity, a superior battery performance can be achieved by using this.

The intermediate (1) solution is obtained by mixing a raw material-containing substance to be described later with a solvent to be described later. When the intermediate (1) is not a solution, in spraying the solution using a spray drying apparatus and drying a solvent, the particle size of sprayed liquid drops cannot be reduced even if the spraying pressure is adjusted. A large particle size of the liquid drops leads to a large particle size of the solid electrolyte produced. Thus, a small particle size of the liquid drops cannot be achieved when the intermediate (1) is not a solution. Particularly in the case of a slurry, the particle size of the resulting product is affected by the particle size of a solid contained in the slurry. The "particle size is affected" means that, in the case of spraying as a slurry as described above, a large median size of the solid electrolyte contained in the slurry leads to a large median size of the solid electrolyte produced, and an unsharp particle size distribution of the solid electrolyte contained in the slurry leads to an unsharp particle size distribution of the solid electrolyte produced.

In the present description, the "solution" does not refer only to a form in which a solute is completely dissolved in a solvent into a uniform state, but also to a concept encompassing a form in which a solute that has not been completely dissolved accounts for 10% by mass or less of the total amount of the raw material-containing substance. The content of the solute that has not been completely dissolved is preferably 5% by mass or less of the total amount of the raw material-containing substance, and further preferably 3% by mass or less. The solute that has not been completely dissolved may be a colloid. An amorphous solid electrolyte or crystalline solid electrolyte may be contained as a sub-component in the solution.

In the present description, the "dissolving" means preparing such a solution as described above from a solute and a solvent.

In the present description, the "slurry" is a mixture of a solid substance and a solvent, and is a fluid having a certain fluidity due to the presence of the solvent, and excludes such a solution as described above.

In the present description, the "solid electrolyte" is an electrolyte that is kept solid at 25°C in nitrogen atmosphere, and that is a solid electrolyte that contains a lithium atom, a sulfur atom, and a phosphorus atom, and a halogen atom as required, and has an ionic conductivity attributable to the lithium atom.

In the present description, the "raw material-containing substance" is a substance containing raw materials in producing a solid electrolyte, and a single compound containing a lithium atom, a phosphorus atom, and a sulfur atom or a mixture of such compounds.

In the present description, the "having a controlled particle size" means a state in which the particle size distribution is sharpened and the median size ($D_{50}$) is decreased as described above. By mixing the raw material-containing substance with a solvent to prepare the intermediate (1) solution and then drying the solvent with a spray drying apparatus at a specific spraying pressure, the particle size can be controlled to produce a solid electrolyte superior in ionic conductivity. Via the intermediate (1) solution, the particle size of the solid electrolyte can be easily controlled and a solid electrolyte superior in ionic conductivity can be produced.

The median size ($D_{50}$) of a solid electrolyte can be measured or calculated, for example, by a method described in the section of Examples. The particle size distribution of a solid electrolyte can be found, for example, from the particle size distribution shown as Fig. 2. The same applies to the particle size at a cumulative volume of 10% ($D_{10}$) and the particle size at a cumulative volume of 90% ($D_{90}$).

A method for producing a solid electrolyte according to a second aspect of this embodiment is the method for producing a solid electrolyte of the first aspect, in which

the spraying pressure is 0.05MPa or more.

The particle size of the produced solid electrolyte can be adjusted by the spraying pressure of the spray drying apparatus. By increasing the spraying pressure, the particle size of sprayed liquid drops can be decreased, and by decreasing the particle size of the liquid drops, the particle size of the produced solid electrolyte can be decreased. When the spraying pressure is 0.05 MPa or more, the particle size of the sprayed liquid drops can be decreased and the particle size of the produced solid electrolyte is controlled, which is preferable.

A method for producing a solid electrolyte according to a third aspect of this embodiment is a method for producing a solid electrolyte, including

mixing a raw material-containing substance that contains a lithium atom, a phosphorus atom, and a sulfur atom with a solvent to prepare a solution of an intermediate (1), and

spraying the intermediate (1) solution using a spray drying apparatus.

As described above, also by spraying the intermediate (1) solution using a spray drying apparatus and removing the solvent contained in the intermediate (1) solution by drying, in other word, only by spraying the intermediate (1) solution using a spray drying apparatus, the solid electrolyte produced has a sharp particle size distribution and a small median size ($D_{50}$), and further, is superior in ionic conductivity.

Whether the first aspect or the third aspect is to use is determined, for example, as follows. When a desired particle size is required, the production method of the first aspect in which adjustment is achieved by a spraying pressure within a prescribed range by the first aspect may be adopted, and in the case without such a requirement, the production method of the third aspect in which only spraying is needed may be adopted.

A method for producing a solid electrolyte according to a fourth aspect of this embodiment is the method for producing a solid electrolyte of the first to third aspect, in which

the solid electrolyte has a median size ($D_{50}$) of less than 9.0 $\mu$m.

When the $D_{50}$ is less than 9.0 $\mu$m, the solid electrolyte has a sharp particle size distribution and a small median size ($D_{50}$), and thus, a contact interface between an electrode active material and the solid electrolyte is likely to be formed, the ionic and electronic conduction paths are better, and a superior battery performance can be achieved, which is preferable.

A method for producing a solid electrolyte according to a fifth aspect of this embodiment is the method for producing a solid electrolyte of any one of the first to fourth aspects, in which

the intermediate (1) has a temperature of 350°C or lower at a spray port of the spray drying apparatus.

When the temperature of the intermediate (1) at a spray port of the spray drying apparatus is 350°C or lower, the particle size of the sprayed liquid drops is small and the particle size distribution of the liquid drops is also small, and thus, the particle size of the produced solid electrolyte is controlled, which is preferable.

Thus, the particle size and the particle size distribution of the produced solid electrolyte largely vary depending on the particle size and the particle size distribution of the sprayed liquid drops, and the particle size and the particle size distribution of the sprayed liquid drops can be controlled by the spraying pressure, and hence, it is important in the production of a solid electrolyte to bring the spraying pressure within a specific range.

A method for producing a solid electrolyte according to a sixth aspect of this embodiment is the method for producing a solid electrolyte of any one of the first to fifth aspects, in which

further pulverizing the solid electrolyte is not performed.

In any one of the first to fifth aspect, the produced solid electrolyte has a controlled particle size. Thus, a step of further pulverization to decrease the particle size can be omitted, and the produced solid electrolyte can be used as a solid electrolyte for a battery or the like without further pulverizing the solid electrolyte, for improving the productivity. Thus, in order to simplify the production process to improve the productivity, it is preferred that further pulverization is not performed after spraying the intermediate (1) solution using a spray drying apparatus.

A method for producing a solid electrolyte according to a seventh aspect of this embodiment is the method for producing a solid electrolyte of any one of the first to sixth aspects, in which

the raw material-containing substance further contains a halogen atom.

When the raw material-containing substance further contains a halogen atom, the resulting solid electrolyte contains a crystal type having a high ionic conductivity, which is preferable.

A method for producing a solid electrolyte according to an eighth aspect of this embodiment is the method for producing a solid electrolyte of any one of the first to seventh aspects, in which

the solvent contains at least one selected from a complexing agent and a raw material-containing substance-solubilized solvent.

As described later, when the solvent contains at least one selected from a complexing agent and a raw material-containing substance-solubilized solvent, the intermediate (1) can be made into a solution, and in spraying the intermediate (1) solution using a spray drying apparatus, the particle size of the sprayed liquid drops can be decreased, and thus, it is possible to control the particle size of the produced solid electrolyte to enhance the productivity, which is preferable.

In order for the solvent to contain at least one solvent of a complexing agent and a raw material-containing substance-solubilized solvent, in addition to a case where a solvent containing a complexing agent and a raw material-containing substance-solubilized solvent is used, an aspect where a solvent containing a complexing agent is used and then, a solvent containing a raw material-containing substance-solubilized solvent is used, and contrarily, an aspect where a solvent containing a raw material-containing substance-solubilized solvent is used and then, a solvent containing a complexing agent is used are included.

A method for producing a solid electrolyte according to a ninth aspect of this embodiment is the method for producing a solid electrolyte of the eighth aspect, in which

the solvent contains a raw material-containing substance-solubilized solvent.

In the present description, the "solubilized" means that the solvent can dissolve the solute, and a "raw material-containing substance-solubilized solvent" to be described later is a solvent that can dissolve the raw material-containing substance and a solvent that can form the aforementioned solution by being mixed with the raw material-containing substance.

When the solvent contains a raw material-containing substance-solubilized solvent, it is possible to easily obtain the intermediate (1) solution and to control the particle size of the produced solid electrolyte to enhance the productivity, which is preferable.

A method for producing a solid electrolyte according to a tenth aspect of this embodiment is the method for producing a solid electrolyte of the eighth or ninth aspect, in which

the solvent contains a complexing agent.

A complexing agent to be described later is an agent that forms a complex with the raw material-containing substance. By forming a complex, a raw material-containing substance-solubilized solvent which is used as required is less likely to come in direct contact with the raw material-containing substance and the like to thus suppress a reaction and the like between the raw material-containing substance-solubilized solvent and the raw material-containing substance and the like, which is preferable. In addition, when the raw material-containing substance contains a halogen atom, a solid electrolyte in which the halogen atom is fixed in a more dispersed state is obtained, which is preferable. Furthermore, a uniform powder is obtained by spraying using a spray drying apparatus, and thus, a solid electrolyte having a higher ionic conductivity can be obtained, and as a result, a higher ionic conductivity is likely to be achieved, which is preferable.

In addition to that, by using a complexing agent, a solid electrolyte can be produced by mixing without a high temperature, which is preferable.

A method for producing a solid electrolyte according to an eleventh aspect of this embodiment is the method for producing a solid electrolyte of any one of the eighth to tenth aspects, in which

the raw material-containing substance-solubilized solvent contains an alcohol solvent.

When the raw material-containing substance-solubilized solvent contains an alcohol solvent, the intermediate (1) solution is likely to be prepared, which is preferable.

A method for producing a solid electrolyte according to a twelfth aspect of this embodiment is the method for producing a solid electrolyte of any one of the eighth to eleventh aspects, in which
the solvent further contains a nonpolar solvent.

When the solvent further contains a nonpolar solvent to be described later, the amount of the complexing agent or the raw material-containing substance-solubilized solvent used as required can be decreased, which is preferable.

A method for producing a solid electrolyte according to a thirteenth aspect of this embodiment is the method for producing a solid electrolyte of any one of the eighth to twelfth aspects, in which
the raw material-containing substance and a solvent containing a complexing agent are mixed, and then, a solvent containing a raw material-containing substance-solubilized solvent is added and mixed.

When the raw material-containing substance and a solvent containing a complexing agent are mixed to form a complex, and then, a solvent containing a raw material-containing substance-solubilized solvent is added and mixed, a higher effect of going through a complex is achieved, which is preferable. While the effect of going through a complex will be described later, when a solid electrolyte (in particular, $Li_3PS_4$) forms a complex, the raw material-containing substance-solubilized solvent and the raw material-containing substance and the like are less likely to come into direct contact, and thus, occurrence of a reaction or the like between the raw material-containing substance-solubilized solvent and the raw material-containing substance and the like is suppressed, which is preferable.

A solid electrolyte according to a fourteenth aspect of this embodiment is a solid electrolyte
having a median size ($D_{50}$) of 1.0 $\mu$m or more and less than 9.0 $\mu$m, a particle size distribution (($D_{90}$-$D_{10}$)/$D_{50}$) based on the median size ($D_{50}$) and a particle size at a cumulative volume of 10% ($D_{10}$) and a particle size at a cumulative volume of 90% ($D_{90}$) of 2.50 or less.

The solid electrolyte of this embodiment is not particular limited on a method of producing the solid electrolyte. The solid electrolyte of this embodiment can be easily produced, for example, by the production method of this embodiment, and the particle size of the obtained solid electrolyte can adjust, for example, a spraying pressure, as described above. The solid electrolyte of this embodiment is a solid electrolyte that has a prescribed median size and particle size distribution obtained, for example, by adjusting the spraying pressure and the like, among solid electrolytes produced by the method for producing a solid electrolyte of this embodiment. The solid electrolyte of this embodiment has a very small median size ($D_{50}$) of 1.0 $\mu$m or more and less than 9.0 $\mu$m and a very sharp particle size distribution (($D_{90}$-$D_{10}$)/$D_{50}$) of 2.50 or less.

As described above, the solid electrolyte of this embodiment has a small median size within a prescribed range and a sharp particle size distribution, and thus, can be densely filled when formed into a battery, and the resistance can be reduced by reducing the interfacial contact. As a result, the solid electrolyte exhibits a superior battery performance.

A solid electrolyte according to a fifteenth aspect of this embodiment is the solid electrolyte of the fourteenth aspect, in which
the solid electrolyte has a specific surface area of 15 cm$^2$/g or more.

When the solid electrolyte has a specific surface area as high as 15 cm$^2$/g or more, the solid electrolyte is likely to be densely filled when formed into a battery, and thus, a superior battery performance is likely to be achieved.

A solid electrolyte according to a sixteenth aspect of this embodiment is the solid electrolyte of the fourteenth or fifteenth aspect, in which
the solid electrolyte has an argyrodite-type crystal structure.

A solid electrolyte having an argyrodite-type crystal structure is known as one having a high ionic conductivity. When the solid electrolyte itself has a crystal structure that exhibit a high ionic conductivity, it is possible to further enhance the battery performance.

The method for producing a solid electrolyte of this embodiment will be described in more detail below along the aspects of implementation.

[Method for producing solid electrolyte]

A method for producing a solid electrolyte of this embodiment is a method for producing a solid electrolyte, including mixing a raw material-containing substance that contains a lithium atom, a phosphorus atom, and a sulfur atom with a solvent to prepare a solution of an intermediate (1), and spraying the intermediate (1) solution using a spray drying apparatus at a spraying pressure of the spray drying apparatus of 0.01 MPa or more. In addition, another method for producing a solid electrolyte of this embodiment is a method for producing a solid electrolyte, including mixing a raw material-containing substance that contains a lithium atom, a phosphorus atom, and a sulfur atom with a solvent to prepare a solution of an intermediate (1), and spraying the intermediate (1) solution using a spray drying apparatus.

Hereinunder, the production method is described, and then, details of the raw material-containing substance, the intermediate (1), the solid electrolyte, the solvent, and the like will be described.

<Preparing solution of intermediate (1)>

The method for producing a solid electrolyte of this embodiment requires including mixing a raw material-containing substance to be described later with a solvent to be described later to prepare a solution of an intermediate (1) to be described later.

Mixing a raw material-containing substance to be described later with a solvent to be described later to prepare a solution of an intermediate (1) to be described later is not particularly limited as long as a solution of the intermediate (1) to be described later can be obtained, and various methods are mentioned according to the solvents used and the order of addition of the solvents. As a method for producing a solid electrolyte that is superior in productivity and gives a sharp particle size distribution, a small median size ($D_{50}$), and a superior ionic conductivity, the following (I) to (V) are preferred, (I) to (III) are more preferred, and for sufficiently exhibiting the effect of formation of a complex, a production, as in (I) to (II), in which the raw material-containing substance and a solvent containing a complexing agent are mixed, and then, a solvent containing the raw material-containing substance-solubilized solvent is further added and mixed is further preferred, and when a complexing agent and/or a raw material-containing substance-solubilized solvent is used, the amounts thereof can be reduced, and therefore, (II) is furthermore preferred.

(I) A raw material-containing substance and a complexing agent are mixed (a slurry containing a complex is obtained), and a raw material-containing substance-solubilized solvent is further added and mixed to prepare a solution of an intermediate (1).

(II) A raw material-containing substance, a nonpolar solvent, and a complexing agent are mixed (a slurry containing a complex is obtained), and a raw material-containing substance-solubilized solvent is further added and mixed to prepare a solution of an intermediate (1).

(III) A raw material-containing substance, a raw material-containing substance-solubilized solvent, and a complexing agent are mixed to prepare a solution of an intermediate (1).

(IV) A raw material-containing substance, a raw material-containing substance-solubilized solvent, a nonpolar solvent, and a complexing agent are mixed to prepare a solution of an intermediate (1).

(V) A raw material-containing substance, a raw material-containing substance-solubilized solvent, and a nonpolar solvent are mixed to prepare a solution of an intermediate (1).

<Mixing>

Mixing in the method for producing a solid electrolyte of this embodiment is not particularly limited as long as a solution of an intermediate (1) to be described later can be obtained by mixing a raw material-containing substance to be described later with a solvent to be described later. Mixing may be achieved by dissolving the raw material-containing substance in the solvent, may be achieved via a suspension in which solid and liquid coexist without complete dissolving the raw material-containing substance, or may be achieved via a slurry in the way as in the above (I) and (II), as long as a solution is made after mixing, for example.

Mixing may be mixing a raw material-containing substance to be described later with a solvent containing a raw material-containing substance-solubilized solvent to be described later or mixing a raw material-containing substance to be described later with a solvent containing a complexing agent to be described later.

By using a raw material-containing substance-solubilized solvent, a solution of an intermediate (1) is easily obtained, which is preferable.

By using a complexing agent, a solid electrolyte can be produced by mixing without a high temperature. By forming a complex with a complexing agent, a raw material-containing substance-solubilized solvent which is used as required and the raw material-containing substance and the like are less likely to come into direct contact, and thus, a reaction or the like between the raw material-containing substance-solubilized solvent and the raw material-containing substance and the like can be suppressed, which is preferable. In addition, when the raw material-containing substance contains a halogen atom, a solid electrolyte in which the halogen atom is fixed in a more dispersed state is obtained, which is preferable.

From the viewpoint that size enlargement in which the particle size increases does not occur in the mixing step and the viewpoint that production is possible at a low temperature with a simple apparatus, the production is preferably conducted in a solvent as in a homogeneous method or a heterogeneous method, and from the viewpoint of achieving a high ionic conductivity and the viewpoint of reducing environmental load involved in use of a solvent, a solid phase method is preferred.

The raw material-containing substance may be solid or liquid, but generally is solid.

The intermediate (1) is made into a solution by being mixed with a solvent. When the intermediate (1) is not a solution, the particle size of the produced solid electrolyte cannot be controlled in the production method of this embodiment as described above.

The method for mixing is not particularly limited, and is any method in which a prepared raw material-containing substance and a prepared solvent are put and mixed in an apparatus that can mix the raw material-containing substance and the solvent.

Mixing in this embodiment may include stirring and pulverization, and use of a stirrer, a mixer, or a pulverizer is preferred, and use of a stirrer and a mixer is more preferred. When a solution of the intermediate (1) is obtained, use of a stirrer is further preferred. When the intermediate (1) is obtained as a slurry and is then made into a solution, the particle size of the solid component contained in the slurry affects the particle size of the solid electrolyte produced in this embodiment, and thus, use of a pulverizer in the step of producing the intermediate (1) is further preferred.

An example of the stirrer and mixer is a mechanically stirring-style mixer in which a stirring blade is provided in a tank. Examples of the mechanically stirring-style mixer include a high-speed stirring-type mixer and a double arm-type mixer. From the viewpoint of increasing the uniformity of raw materials in the mixture of the raw material-containing substance and the complexing agent to achieve a higher ionic conductivity, a high-speed stirring-type mixer is preferably used. Examples of the high-speed stirring-type mixer include a vertical axis rotation-type mixer and a horizontal axis rotation-type mixer, and a mixer of either type may be used.

Examples of the shape of the stirring blade used in the mechanically stirring-style mixer include a blade shape, an arm shape, an anchor shape, a paddle shape, a full-zone shape, a ribbon shape, a multistep blade shape, a double arm shape, a shovel shape, a twin-shaft blade shape, a flat blade shape, and a C-type blade shape, and from the viewpoint of increasing uniformity of raw materials in the raw material-containing substance to achieve a higher ionic conductivity, a shovel shape, a flat blade shape, a C-type blade shape, and the like are preferred.

In the case of production of a small amount, stirring with a stirring bar may be adopted.

The temperature condition in mixing a raw material-containing substance and a solvent is not particularly limited, and, for example, is -30 to 100°C, preferably -10 to 50°C, more preferably approximately a room temperature (23°C) (for example approximately a room temperature ± 5°C). The mixing time is approximately 0.1 to 150 hours, and from the viewpoint of more uniformly mixing them to achieve a higher ionic conductivity, is preferably 0.2 to 120 hours, more preferably 0.3 to 100 hours, and further preferably 0.5 to 80 hours.

An example of the pulverizer is a pulverizer having a rotor that can stir a solid electrolyte.

By adjusting the peripheral speed of the rotor of the pulverizer, crushing (particle refinement) and size enlargement (particle growing) of the solid electrolyte can be adjusted. That is, in addition to mixing, crushing can decrease the median size, or size enlargement can increase the median size, and thus, the morphology of the solid electrolyte can be easily freely adjusted. More specifically, crushing can be caused by rotating the rotor at a low peripheral speed, and size enlargement can be caused by rotating the rotor at a high peripheral speed. Thus, only by adjusting the peripheral speed of the rotor, the morphology of the solid electrolyte can be easily adjusted.

The peripheral speed of the rotor cannot be completely defined because whether a low peripheral speed or a high peripheral speed is to be adopted can be changed depending on, for example, the particle size, material, and amount of the medium used in the pulverizer. For example, in the case of an apparatus without balls, beads, or another pulverization medium, such as a high-speed revolution thin film-type stirrer, crushing mainly occurs even at a relatively higher peripheral speed and size enlargement is less likely to occur. On the other hand, in the case of an apparatus with a pulverization medium, such as a ball mill or a bead mill, crushing can be caused at a low peripheral speed and size enlargement can be caused at a high peripheral speed as described above. Accordingly, if the prescribed conditions, such as the pulverization apparatus and the pulverization medium, are the same, the peripheral speed that can cause crushing is lower than the peripheral speed that can cause size enlargement. Accordingly, for example, in the conditions that can cause size enlargement from a peripheral speed of 6 m/s, a low peripheral speed means lower than 6 m/s and a high peripheral speed means 6 m/s or higher.

A specific example of a pulverizer is a medium-style pulverizer. The medium-style pulverizer is roughly divided into a vessel driving-style pulverizer and a medium stirring-style pulverizer.

Examples of the vessel driving-style pulverizer include a ball mill and a bead mill which include a stirring tank, a pulverization tank, or a combination thereof. As the ball mill or bead mill, any of various types, such as a rotation type, a rolling type, a vibration type, and a planetary type, can be adopted.

Examples of the medium stirring-style pulverizer include various pulverizers, for example, impact-style pulverizers, such as a cutter mill, a hummer mill, and a pin mill; a tower-type pulverizer, such as a tower mill; stirring tank-type pulverizers, such as an attritor, Aqua Mizer, and a sand grinder; distribution tank-type pulverizers, such as Visco Mill and Pearl Mill; a distribution tube-type pulverizer; an annular-type pulverizer, such as CoBall mill; and a continuous dynamic pulverizer.

In a mechanical treatment of the solid electrolyte, when the intermediate (1) is used as a slurry, from the viewpoint of more easily adjusting a desired morphology, a vessel driving-style pulverizer is preferred, and especially, a bead mill and a ball mill are preferred. A vessel driving-style pulverizer, such as a bead mill or a ball mill, is provided with a vessel, such as a stirring tank or a pulverization tank, for storing a precursor for mechanical treatment, as a rotor that can stir the precursor for mechanical treatment. Accordingly, as described above, by adjusting the peripheral speed of the rotor, the morphology of the solid electrolyte can be easily adjusted.

Since the bead mill or ball mill can adjust the morphology also by adjusting the particle size, material, and amount of the beads, balls, or the like used, it is possible to more finely adjust the morphology, and it is also possible to adjust such a morphology that has not been conventionally present. For example, as the bead mill, a centrifugal type in which ultra fine particles ($\varphi$0.015 to 1 mm or so), so-called microbeads can be used (for example, Ultra Apex Mill (UAM)) can also be used.

For adjusting the morphology, as the energy imparted to the solid electrolyte is decreased, that is, the peripheral speed of the rotor is decreased, or the particle size of the beads, balls, or the like is decreased, the median size tends to decrease (crushing) and the specific surface area tends to increase. On the other hand, as the energy is increased, that is, the peripheral speed of the rotor is increased, or the particle size of the beads, balls, or the like is increased, the median size tends to increase (size enlargement) and the specific surface area tends to decrease.

In addition, for example, as the time for the mechanical treatment is increased, the median size tends to increase (size enlargement).

The particle size of the medium used in the bead mill, ball mill, or the like may be appropriately determined in view of, in addition to the desired morphology, the type, scale, and the like of the apparatus used, and is generally preferably 0.01 mm or more, more preferably 0.015 mm or more, further preferably 0.02 mm or more, and furthermore preferably 0.04 mm or more, and the upper limit is preferably 3 mm or less, more preferably 2 mm or less, further preferably 1 mm or less, and furthermore preferably 0.8 mm or less.

Examples of the material of the medium include metals, such as stainless steel, chromium steel, and tungsten carbide; ceramics, such as zirconia and silicon nitride; and a mineral, such as agate.

The treatment time for the mechanical treatment may be appropriately determined in view of, in addition to the desired morphology, the type, scale, and the like of the apparatus used, and is generally preferably 5 seconds or more, more preferably 30 seconds or more, further preferably 3 minutes or more, and furthermore preferably 15 minutes or more, and the upper limit is preferably 5 hours or less, more preferably 3 hours or less, further preferably 2 hours or less, and furthermore preferably 1.5 hours or less.

The peripheral speed of the rotor in the mechanical treatment (the rotation speed in the apparatus, such as a bead mill or ball mill) may be appropriately determined in view of, in addition to the desired morphology, the type, scale, and the like of the apparatus used, and is generally preferably 0.5 m/s or more, more preferably 1 m/s or more, further preferably 2 m/s or more, and furthermore preferably 3 m/s or more, and the upper limit is preferably 55 m/s or less, more preferably 40 m/s or less, further preferably 25 m/s or less, and furthermore preferably 15 m/s or less. The peripheral speed may be constant or may be changed on the course.

<Drying using spray drying apparatus>

The method for producing a solid electrolyte of this embodiment requires spraying the intermediate (1) solution using a spray drying apparatus at a spraying pressure of the spray drying apparatus of 0.01 MPa or more, or spraying the intermediate (1) solution using a spray drying apparatus.

By spraying the intermediate (1) solution, the solvent can be removed from the intermediate (1) solution by drying. In addition, when the spraying pressure of the spray drying apparatus is less than 0.01 MPa, the particle size of the liquid drops sprayed from the spray drying apparatus increases, it tends to be difficult to control the particle size of the solid electrolyte produced by the production method of this embodiment. Thus, by adjusting the spraying pressure, the particle size of liquid drops can be controlled to control the particle size of a solid electrolyte produced. On the other hand, as described above, since, only by spraying the intermediate (1) solution using a spray drying apparatus, the particle size of liquid drops can be sufficiently controlled without depending on the spraying pressure, it is possible to obtain a solid electrolyte that has a sharp particle size distribution and a small median size. Accordingly, for example, when a solid electrolyte that has a desired particle size is demanded, the production method in which the spraying pressure of the spray drying apparatus is adjusted within a range of 0.01 MPa or more can be adopted, and when such a solid electrolyte is not demanded, the production method in which the intermediate (1) solution is sprayed simply using a spray drying apparatus can be adopted.

In order to control the particle size of the solid electrolyte, the spraying pressure of the spray drying apparatus is preferably 0.02 MPa or more, more preferably 0.03 MPa or more, further preferably 0.05 MPa or more, furthermore preferably 0.12 MPa or more, more prominently preferably 0.18 MPa or more, and furthermore prominently preferably 0.25 MPa or more.

The upper limit is not particularly limited, and is determined according to the performance and the specification of the apparatus, and is generally 20.00 MPa or less.

In the aspect in which the intermediate (1) solution is sprayed regardless of the spraying pressure, from the viewpoint of more easily controlling the particle size, the spraying pressure is preferably within the above range, including 0.01 MPa or more.

When the spraying pressure is within a specific range as described above, the flow velocity of the intermediate (1) solution in a nozzle can be a certain value or higher and a good dispersibility is likely to be achieved, and thus, a solid electrolyte that is not aggregated but has a small particle size is likely to be obtained. In the sprayed liquid drops, the solvent contained in the intermediate (1) solution is removed by drying, whereby a dried powder can be obtained. The dried powder is a solid electrolyte or a complex, and by heating and/or pulverization to be described later as required, a solid electrolyte produced by the production method of this embodiment is resulted. When the solid electrolyte is required to have a desired median size ($D_{50}$), the spraying pressure is determined so that the median size ($D_{50}$) becomes a target value.

An example of the spray drying apparatus used in the production method of this embodiment is one of such a form that sprays the intermediate (1) solution together with a heated gas from a spray nozzle unit and dries the intermediate (1) solution in contact with a gas that is separately heated as required.

The conditions of use in the case of using a spray drying apparatus may be appropriately determined according to the kind of the solvent contained in intermediate (1) solution, and cannot be completely defined because they depend on the boiling point of the solvent and the like. However, the temperature of the intermediate (1) solution at a spray port of the spray drying apparatus is preferably 350°C or lower since the solvent from the sprayed liquid drops is then dried at a proper rate to control the particle size of the solid electrolyte. The temperature is more preferably 300°C or lower, further preferably 250°C or lower, and furthermore preferably 230°C or lower.

For reducing the time for drying to enhance the productivity, the lower limit is preferably 80°C or higher, and more preferably 100°C or higher.

When the solvent contains a complexing agent and the intermediate (1) contains a complex, for removing the complexing agent from the complex, the temperature is further preferably 150°C or higher, and further preferably 180°C or higher.

By spraying the intermediate (1) solution using a spray drying apparatus, in the case where a crystalline solid electrolyte to be described later is to be obtained, for crystallization, the temperature is further preferably 150°C or higher, and further preferably 180°C or higher.

The amount of the intermediate (1) solution supplied to a nozzle cannot be completely set because it may depend on the scale of the spray drying apparatus, and can be appropriately determined according to the scale, and can be generally approximately 1 to 60 g/minute, and from the viewpoint of drying in a shorter time, is preferably 3 to 50 g/minute, more preferably 5 to 40 g/minute, and further preferably 10 to 30 g/minute.

The conditions of the operation of the spray drying apparatus can be, for example, as described in a method described in the section of Examples.

A fluid containing a gas supplied as a heat medium or the like and a powder of the solid electrolyte and the like, after passing through the spray drying apparatus, can be collected by being supplied to a bag filter. As the bag filter, a bag filter which is described as one that can be used in the fluidized drying as described above may be adopted.

As a filter used in the bag filter, any filter can be used with no particular limitation, and examples thereof include filters composed of materials, such as polypropylene, nylon, acryl, polyester, cotton, wool, heat-resistant nylon, polyamide-polyimide, PPS (polyphenylene sulfide), glass fiber, and PTFE (polytetrafluoroethylene), and a filter with function, such as an electrostatic filter, can also be used. Among them, filters composed of heat-resistant nylon, polyamide-polyimide, PPS (polyphenylene sulfide), glass fiber, and PTFE (polytetrafluoroethylene) are preferred, and filters composed of heat-resistance nylon, PPS (polyphenylene sulfide), and PTFE (polytetrafluoroethylene) are more preferably, and a filter composed of PTFE (polytetrafluoroethylene) is particularly preferred.

<Raw material-containing substance>

The raw material-containing substance used in this embodiment requires containing a lithium atom, a phosphorus atom, and a sulfur atom. When the raw material-containing substance contains a lithium atom, a phosphorus atom, and a sulfur atom, a solid electrolyte that contains these atoms can be produced.

The raw material-containing substance contains one kind or two or more kinds of raw materials in producing a solid electrolyte. The raw material-containing substance may be a single raw material that contains a lithium atom, a phosphorus atom, and a sulfur atom or may be a mixture of such raw materials. The raw material-containing substance and the raw materials may further contain a halogen atom. In other words, the raw material-containing substance may, as required, contain a raw material (compound) that contains a halogen atom.

As a raw material contained in the raw material-containing substance, for example, a compound that contains at least one of a lithium atom, a sulfur atom, and a phosphorus atom can be used, and as required, a halogen atom may be contained. More specific examples include lithium sulfide; a phosphorus sulfide, such as diphosphorus trisulfide ($P_2S_3$) or diphosphorus pentasulfide ($P_2S_5$); and a solid electrolyte, such as amorphous $Li_3PS_4$ or crystalline $Li_3PS_4$, which is obtained from lithium sulfide and a phosphorus sulfide and has a $PS_4$ structure as a molecular structure. Examples of the compound containing a halogen atom include raw materials composed of at least two kinds of atoms selected from the aforementioned four kinds of atoms, for example, lithium halides, such as lithium fluoride, lithium chloride, lithium bromide, and lithium iodide; phosphorus halides, such as various phosphorus fluorides ($PF_3$, $PF_5$), various phosphorus chlorides ($PCl_3$, $PCl_5$, $P_2Cl_4$), various phosphorus bromides ($PBr_3$, $PBr_5$), and various phosphorus iodides ($PI_3$, $P_2I_4$); and thiophosphoryl halides, such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichloride fluoride ($PSCl_2F$), and thiophosphoryl dibromide fluoride ($PSBr_2F$); halogen single substances, such as fluorine ($F_2$), chlorine ($Cl_2$), bromine ($Br_2$), and iodine ($I_2$), preferably chlorine ($Cl_2$), bromine ($Br_2$), and iodine ($I_2$), and further preferably bromine ($Br_2$) and iodine ($I_2$).

The raw material-containing substance is preferably lithium sulfide and a phosphorus sulfide. When a raw material containing a halogen atom is used, it is further preferred that at least one selected from a lithium halide, a phosphorus halide, and a halogen molecule is contained.

When at least one selected from lithium sulfide, a phosphorus sulfide, a lithium halide, a phosphorus halide, and a halogen molecule is used, a solid electrolyte having a high ionic conductivity is obtained, which is preferable. When a lithium halide is used together with a complexing agent to be described later for introducing a halogen atom into a solid electrolyte, in a step of removing a solvent and the like to be described later, separation of the halogen atom does not occur and a solid electrolyte having a high ionic conductivity can be obtained, which is preferable.

Examples of the compound that can be used as a raw material other than the above compounds include raw materials that contain at least one atom selected from the four kinds of atoms and contain an atom other than the four kinds of atoms, and more specifically, lithium compounds, such as lithium oxide, lithium hydroxide, and lithium carbonate; alkali metal sulfides, such as sodium sulfide, potassium sulfide, rubidium sulfide, and cesium sulfide; metal sulfides, such as silicon sulfide, germanium sulfide, boron sulfide, gallium sulfide, tin sulfides ($SnS$, $SnS_2$), aluminum sulfide, and zinc sulfide; phosphate compounds, such as sodium phosphate and lithium phosphate; halides of alkali metals other than lithium, for example, sodium halides, such as sodium iodide, sodium fluoride, sodium chloride, and sodium bromide; metal halides, such as aluminum halide, silicon halide, germanium halide, arsenic halide, selenium halide, tin halide, antimony halide, tellurium halide, and bismuth halide; and oxyphosphorus halides, such as oxyphosphorus chloride ($POCl_3$) and oxyphosphorus bromide ($POBr_3$).

From the viewpoint of more easily obtaining a solid electrolyte having a high ionic conductivity, as a raw material, among the above compounds, lithium sulfide and a phosphorus sulfide, such as diphosphorus trisulfide ($P_2S_3$) or diphosphorus pentasulfide ($P_2S_5$) are preferred. When a raw material containing a halogen atom is further used, a halogen single substance (halogen molecule), such as fluorine ($F_2$), chlorine ($Cl_2$), bromine ($Br_2$), or iodine ($I_2$), or a lithium halide, such as lithium fluoride, lithium chloride, lithium bromide, or lithium iodide is preferred. Preferred example of a combination of raw materials include a combination of lithium sulfide, diphosphorus pentasulfide, and a lithium halide and a combination of lithium sulfide, diphosphorus pentasulfide, and a halogen single substance. As the lithium halide, lithium bromide and lithium iodide are preferred, and as the halogen single substance, bromine and iodine are preferred.

The lithium sulfide used in this embodiment is preferably particles.

The median size ($D_{50}$) of lithium sulfide particles is preferably 10 $\mu$m or more and 2000 $\mu$m or less, more preferably 30 $\mu$m or more and 1500 $\mu$m or less, and further preferably 50 $\mu$m or more and 1000 $\mu$m or less. In the present description, the median size ($D_{50}$) is a particle diameter to reach 50% of all of the particles in sequential cumulation from particles of the smallest particle size in drawing a particle size distribution cumulative curve, and the volumetric distribution is a median size which can be measured, for example, using a laser diffraction/scattering particle size distribution analyzer. For a solid raw material among the compounds exemplified above as a raw material, a compound having a similar median size to that of the lithium sulfide particles is preferred, that is, a compound having a median size in the same range as that of the lithium sulfide particles is preferred.

<Solution of intermediate (1) >

The intermediate (1) used in this embodiment contains at least one of the raw material-containing substance, a complex to be described later, and a solid electrolyte to be described later, and typical examples include the following forms (i) to (iii). A solution of the intermediate (1) containing a raw material-containing substance-solubilized solvent is preferably a solution of (i) to (iii) for controlling the particle size of the solid electrolyte, more preferably a solution of (i) or (ii), and further preferably a solution of (ii).

(i) Containing the raw material-containing substance (containing the raw materials) as a main component
(ii) Containing a complex as a main component
(iii) Containing a solid electrolyte as a main component

For example, the above (ii) means containing a complex as a main component, and optionally containing the raw material-containing substance and optionally containing a solid electrolyte. In the present description, the "main component" means a component that accounts for 50% by mass or more of the components excluding the solvent, and the phrase "containing as a main component" means containing as a main component in a dissolved state.

The intermediate (1) contains an atomic species that the raw material-containing substance contains.

<Solid electrolyte>

The solid electrolyte in this embodiment encompasses, not only the solid electrolyte produced in this embodiment, a solid electrolyte as an intermediate that is produced in the production process of the production method of this embodiment and reacts with another compound.

The solid electrolyte produced in this embodiment has been dried with a spray drying apparatus, and thus, is solid and is preferably in a particle form. A solid electrolyte obtained by the production method of this embodiment contains both of a crystalline solid electrolyte which has a crystal structure and an amorphous solid electrolyte. In the present description, the "crystalline solid electrolyte" is a solid electrolyte for which a peak derived from a solid electrolyte is observed in an X-ray diffraction pattern in an X-ray diffraction measurement regardless of presence or absence of a peak derived from a raw material of a solid electrolyte. In other words, the crystalline solid electrolyte contains a crystal structure derived from a solid electrolyte, and a part thereof may have a crystal structure derived from the solid electrolyte or the whole thereof may have a crystal structure derived from the solid electrolyte. The crystalline solid electrolyte may contain an amorphous solid electrolyte as a part thereof as long as it has such an X-ray diffraction pattern as above. Accordingly, the crystalline solid electrolyte encompasses a so-called glass ceramic which is obtained by heating an amorphous solid electrolyte to the crystallization temperature or higher.

In the present description, the "amorphous solid electrolyte" means one that gives an X-ray diffraction pattern of a halo pattern in which any other peak than peaks derived from the materials is not substantially observed in an X-ray diffraction measurement regardless of the presence or absence of a peak derived from a raw material of the solid electrolyte.

The amounts of the lithium atom, phosphorus atom, and sulfur atom contained in a solid electrolyte can be determined by a measurement with an inductively coupled plasma (ICP) emission spectrophotometer described in the section of Examples. The amount of an organic group contained can be determined by an appropriate combination of Fourier transform infrared spectrophotometer (FT-IR), solid-state nuclear magnetic resonance (NMR) spectrometry, gas chromatography, gas chromatography mass spectrometry (GC-Mass), and the like with a focus on a characteristic functional group of the organic group.

(Amorphous solid electrolyte)

The amorphous solid electrolyte obtained by the production method of this embodiment preferably contains a lithium atom, a sulfur atom, and a phosphorus atom, and a halogen atom as required, and typical preferred examples thereof include a solid electrolyte constituted of a lithium sulfide, a phosphorus sulfide, and a lithium halide, such as $Li_2S$-$P_2S_5$, $Li_2S$-$P_2S_5$-LiI, $Li_2S$-$P_2S_5$-LiCl, $Li_2S$-$P_2S_5$-LiBr, or $Li_2S$-$P_2S_5$-LiI-LiBr; and solid electrolyte that further contains another atom, for example, an oxygen atom or a silicon atom, such as $Li_2S$-$P_2S_5$-$Li_2O$-LiI or $Li_2S$-$SiS_2$-$P_2S_5$-LiI. From the viewpoint of achieving a higher ionic conductivity, an amorphous solid electrolyte constituted of lithium sulfide, a phosphorus sulfide, and a lithium halide, such as $Li_2S$-$P_2S_5$-LiI, $Li_2S$-$P_2S_5$-LiCl, $Li_2S$-$P_2S_5$-LiBr, or $Li_2S$-$P_2S_5$-LiI-LiBr is preferred.

The kinds of atoms constituting the amorphous solid electrolyte can be found, for example, with an ICP emission spectrophotometer.

(Crystalline solid electrolyte)

A crystalline solid electrolyte obtained by the production method of this embodiment may be a so-called glass ceramic which is obtained by heating an amorphous solid electrolyte to the crystallization temperature or higher, and examples of the crystal structure thereof include an $Li_3PS_4$ crystal structure, an $Li_4P_2S_6$ crystal structure, an $Li_7PS_6$ crystal structure, an $Li_7P_3S_{11}$ crystal structure, and a crystal structure having peaks at around $2\theta = 20.2°$ and around $23.6°$ (see, for example, JP 2013-16423 A).

A preferred example of a crystalline solid electrolyte containing a halogen atom is a crystalline solid electrolyte having an argyrodite-type crystal structure that has an $Li_7PS_6$ structural backbone in which P is partially substituted with Si.

Examples of the compositional formula of the argyrodite-type crystal structure include crystal structures represented by the compositional formulae: $Li_{7-x}P_{1-y}Si_yS_6$ and $Li_{7+x}P_{1-y}Si_yS_6$ (x is -0.6 to 0.6, y is 0.1 to 0.6). The argyrodite-type crystal structures represented by the compositional formulae are a cubic crystal or an orthorhombic crystal, and preferably a cubic crystal, and have peaks mainly appearing at positions of $2\theta = 15.5°$, $18.0°$, $25.0°$, $30.0°$, $31.4°$, $45.3°$, $47.0°$, and $52.0°$ in the X-ray diffractometry using a CuK$\alpha$ line.

Another example of the compositional formula of the argyrodite-type crystal structure is a compositional formula $Li_{7-x-2y}PS_{6-x-y}Cl_x$ ($0.8 \leq x \leq 1.7$, $0 < y \leq -0.25x + 0.5$). The argyrodite-type crystal structure represented by this compositional formula is preferably a cubic crystal and has peaks mainly appearing at positions of $2\theta=15.5°$, $18.0°$, $25.0°$, $30.0°$, $31.4°$, $45.3°$, $47.0°$, and $52.0°$ in the X-ray diffractometry using a CuK$\alpha$ line.

Still another example of the compositional formula of the argyrodite-type crystal structure is a compositional formula $Li_{7-x}PS_{6-x}Ha_x$ (Ha is Cl or Br, x is preferably 0.2 to 1.8). The argyrodite-type crystal structure represented by this compositional formula is preferably a cubic crystal and has peaks mainly appearing at positions of $2\theta=15.5°$, $18.0°$, $25.0°$, $30.0°$, $31.4°$, $45.3°$, $47.0°$, and $52.0°$ in the X-ray diffractometry using a CuK$\alpha$ line.

The positions of the peaks may vary within the range of $\pm0.5°$.

Examples also include an $Li_{4-x}Ge_{1-x}P_xS_4$-based thio-LISICON Region II-type crystal structure (see Kanno, et al., Journal of The Electrochemical Society, 148 (7) A742-746 (2001)) and a crystal structure similar to the $Li_{4-x}Ge_{1-x}P_xS_4$-based thio-LISICON Region II-type crystal structure (see Solid State Ionics, 177 (2006), 2721-2725). Among the above structures, the crystal structure of a crystalline solid electrolyte obtained by the method for producing a solid electrolyte of this embodiment preferably has a thio-LISICON Region II-type crystal structure in that a higher ionic conductivity can be achieved. Here, the "thio-LISICON Region II-type crystal structure" expresses any one of an $Li_{4-x}Ge_{1-x}P_xS_4$-based thio-LISICON Region II-type crystal structure and a crystal structure similar to the $Li_{4-x}Ge_{1-x}P_xS_4$-based thio-LISICON Region II-type crystal structure.

The crystalline solid electrolyte obtained by the production method of this embodiment may contain the thio-LISICON Region II-type crystal structure or may contain the thio-LISICON Region II-type crystal structure as a main crystal. From the viewpoint of achieving a higher ionic conductivity, the crystalline solid electrolyte preferably contains the thio-LISICON Region II-type crystal structure as a main crystal. In the present description, the phrase "containing as a main crystal" means that the percentage of the subject crystal structure in the crystal structure is 80% or more, preferably 90% or more, and more preferably 95% or more. In addition, a crystalline solid electrolyte obtained by the production method of this embodiment preferably does not contain crystalline $Li_3PS_4(\beta-Li_3PS_4)$ from the viewpoint of achieving a higher ionic conductivity.

In the X-ray diffractometry using a CuK$\alpha$ line, diffraction peaks of the $Li_3PS_4$ crystal structure appear, for example, at around $2\theta=17.5°$, $18.3°$, $26.1°$, $27.3°$, and $30.0°$, diffraction peaks of the $Li_4P_2S_6$ crystal structure appear, for example, at around $2\theta=16.9°$, $27.1°$, and $32.5°$, diffraction peaks of the $Li_7PS_6$ crystal structure appear, for example, at around $2\theta=15.3°$, $25.2°$, $29.6°$, and $31.0°$, diffraction peaks of the $Li_7P_3S_{11}$ crystal structure appear, for example, at around $2\theta=17.8°$, $18.5°$, $19.7°$, $21.8°$, $23.7°$, $25.9°$, $29.6°$, and $30.0°$, diffraction peaks of the $Li_{4-x}Ge_{1-x}P_xS_4$-based thio-LISICON Region II-type crystal structure appear, for example, at around $2\theta=20.1°$, $23.9°$, and $29.5°$, and diffraction peaks of the crystal structure similar to the $Li_{4-x}Ge_{1-x}P_xS_4$-based thio-LISICON Region II-type appear, for example, at around $2\theta=20.2°$ and $23.6°$. The positions of the peaks may vary within the range of $\pm0.5°$.

In the solid electrolyte produced in this embodiment, the contents of the lithium atom, sulfur atom, phosphorus atom, and halogen atom in the crystalline solid electrolyte are the same as in the amorphous solid electrolyte.

(Properties of solid electrolyte)

The shape of a solid electrolyte obtained by the production method of this embodiment is a particle shape.

The median size ($D_{50}$) of the particulate solid electrolyte is preferably less than 9.0 $\mu$m. Because of this, a contact interface between an electrode active material and the solid electrolyte is likely to be formed, the ionic and electronic conduction paths are better. From the same point of view, the median size ($D_{50}$) is more preferably 8.9 $\mu$m or less, further preferably 8.0 $\mu$m or less, furthermore preferably 7.0 $\mu$m or less, and particularly preferably 6.5 $\mu$m or less. The median size ($D_{50}$) can be adjusted by changing the spraying pressure of the spray drying apparatus. The lower limit is not particularly limited, but due to the performance of the spray drying apparatus and the productivity, for example, preferred examples of the lower limit include 0.01 $\mu$m or more, 0.03 $\mu$m or more, 0.05 $\mu$m or more, and 0.1 $\mu$m or more, and 0.8 $\mu$m or more is more preferred, 1.0 $\mu$m or more is further preferred, and 1.5 $\mu$m or more is furthermore preferred.

Accordingly, in the production method of this embodiment, a solid electrolyte obtained by the production method of this embodiment need not be subjected to pulverization (particle refinement). When pulverization is not performed, it is not necessary to use a pulverizer. Thus, a solid electrolyte obtained by the production method of this embodiment is preferably not subjected to further pulverization, for increasing the productivity.

Similarly, the particle size at a cumulative volume of 10% ($D_{10}$) of the particulate solid electrolyte is preferably 0.05 $\mu$m or more and 10.0 $\mu$m or less, more preferably 0.50 $\mu$m or more and 6.0 $\mu$m or less, and further preferably 1.0 $\mu$m or more and 4.0 $\mu$m or less.

The particle size at a cumulative volume of 90% ($D_{90}$) of the particulate solid electrolyte is preferably 0.10 $\mu$m or more and 20.0 $\mu$m or less, more preferably 1.0 $\mu$m or more and 15.0 $\mu$m or less, and further preferably 3.0 $\mu$m or more and 10.0 $\mu$m or less.

The particle size distribution of the particulate solid electrolyte is represented by $(D_{90}-D_{10})/D_{50}$. When $(D_{90}-D_{10})/D_{50}$ is 3.00 or less, it can be said that the particle size distribution is sharp, which is preferable. From the same point of view, $(D_{90}-D_{10})/D_{50}$ is more preferably 2.50 or less, further preferably 2.00 or less, furthermore preferably 1.50 or less, and particularly preferably 1.25 or less. The lower limit is not particularly limited, but, due to the performance of the spray drying apparatus and the productivity, is 0.01 or more.

The median size of a solid electrolyte can be measured, for example, by a measurement method described in the section of Examples. The particle size distribution can be determined, for example, from the shape of the particle size distribution of the solid electrolyte produced as shown in Fig. 2. It can be seen that a solid electrolyte (1) has a sharper particle size distribution as compared with that of a solid electrolyte (C1).

The specific surface area of the particulate solid electrolyte is preferably 15 $m^2$/g or more. When a solid electrolyte has a high specific surface area, the solid electrolyte is likely to be densely filled when formed into a battery, and thus, a superior battery performance is likely to be achieved. From the same point of view, the specific surface area of the solid electrolyte is more preferably 16 $m^2$/g or more, further preferably 17 $m^2$/g or more, and furthermore preferably 18 $m^2$/g or more. The upper limit is not particularly limited, but, due to the performance of the spray drying apparatus and the productivity, is 50 $m^2$/g or less.

In the present description, the specific surface area of the solid electrolyte is a measurement value measured by a method described in the section of Examples.

The crystallite diameter of the solid electrolyte in this embodiment is preferably 30 nm or more. From the viewpoint of increasing the ionic conductivity, the crystallite diameter is preferably 33 nm or more, more preferably 35 nm or more, further preferably 40 nm or more, furthermore preferably 70 nm or more, and more prominently preferably 80 nm or more. The upper limit is not particularly limited, but due to the productivity, is preferably 300 nm or less, more preferably 250 nm or less, further preferably 200 nm or less, furthermore preferably 150 nm or less, and more prominently preferably 130 nm or less.

The ionic conductivity of the solid electrolyte of this embodiment obtained by the production method of this embodiment is very high due to the controlled particle size, and can generally be 0.01 mS/cm or more. The ionic conductivity is more preferably 1.00 mS/cm or more, further preferably 2.00 mS/cm or more, furthermore preferably 2.50 mS/cm or more, more prominently preferably 3.00 mS/cm or more, and particularly preferably 3.50 mS/cm or more. The upper limit is not particularly limited.

In the present description, the ionic conductivity of the solid electrolyte is a measurement value measured by a method described in the section of Examples.

(Use)

Since a solid electrolyte obtained by the production method of this embodiment has a controlled particle size and can be subjected to production of a battery, the solid electrolyte can efficiently exhibit a superior battery performance. Since the solid electrolyte also has a high ionic conductivity and a superior battery performance, the solid electrolyte can be suitably used for a battery.

A solid electrolyte obtained by the production method of this embodiment may be used in a positive electrode layer, may be used in a negative electrode layer, or may be used in an electrolyte layer. These layers can each be produced by a known method.

In the battery, besides the positive electrode layer, electrolyte layer, and negative electrode layer, a collector is preferably used. As the collector, a known one can be used. A layer in which a substance that reacts with the solid electrolyte, such as Au, Pt, Al, Ti, or Cu, is coated with Au or the like can be used.

<Solvent>

As a solvent used in the production method of this embodiment, a solvent which has been conventionally used in production of a solid electrolyte can be widely adopted, and depending on the properties and use purpose thereof, a nonpolar solvent, a complexing agent, and a raw material-containing substance-solubilized solvent are exemplified. The solvent preferably contains at least one selected from a complexing agent and a raw material-containing substance-solubilized solvent. When the solvent contains a raw material-containing substance-solubilized solvent, it is possible to easily obtain a solution of the intermediate (1) and it is possible to control the particle size of the produced solid electrolyte to increase the productivity, which is preferable. When the solvent contains a complexing agent, a solid electrolyte having a high ionic conductivity can be produced as described later, which is preferable.

When the solvent further contains a nonpolar solvent to be described later, the amount of the complexing agent or raw material-containing substance-solubilized solvent used as required can be decreased, which is preferable.

When the solvent is a combination of two or more kinds, as the combination, a combination containing a complexing agent and a raw material-containing substance-solubilized solvent, a combination containing a nonpolar solvent and a raw material-containing substance-solubilized solvent, and a combination containing a nonpolar solvent, a complexing agent, and a raw material-containing substance-solubilized solvent are preferred.

In addition, a solvent other than a nonpolar solvent, a complexing agent, and a raw material-containing substance-solubilized solvent may be contained.

Details of the nonpolar solvent, the complexing agent, and the raw material-containing substance-solubilized solvent will be described later. In the present description, the "nonpolar solvent" is used in the same meaning as the generally used one. However, the complexing agent and the raw material-containing substance-solubilized solvent cannot be clearly distinguished. For example, there is a raw material-containing substance-solubilized solvent that forms a complex with the raw material-containing substance, or there is a complexing agent that dissolves the raw material-containing substance. When two or more compounds are used as a solvent, a compound that has a relatively higher ability to form a complex with the raw material-containing substance is considered as a complexing agent, and a compound that has a relatively lower ability to form a complex with the raw material-containing substance but dissolves the raw material-containing substance is considered as a raw material-containing substance-solubilized solvent. Thus, whether a compound is considered as a complexing agent or as a raw material-containing substance-solubilized solvent is determined according to the relative ability to form a complex with the raw material-containing substance with respect to the compound combined therewith. Of course, in the case where the solvent is one compound, or depending on the combination of compounds, a compound may play both roles of a complexing agent and a raw material-containing substance-solubilized solvent.

The amount of the solvent used relative to 1 g of the total mass of the raw material-containing substance is, for obtaining a solid electrolyte having a sharp particle size distribution and a small median size ($D_{50}$), preferably 0.1 g or more and 50.0 g or less, more preferably 1.0 g or more and 30.0 g or less, and further preferably 5.0 g or more and 25.0 g or less.

Hereinunder, the raw material-containing substance-solubilized solvent, the nonpolar solvent, and the complexing agent will be described.

(Raw material-containing substance-solubilized solvent)

The raw material-containing substance-solubilized solvent used in the production method of this embodiment is a solvent that can form a solution of the intermediate (1). The raw material-containing substance-solubilized solvent is a solvent that dissolves the raw material-containing substance. The raw material-containing substance-solubilized solvent preferably dissolves, in addition to the raw material-containing substance, the complex and/or the solid electrolyte. That is, the raw material-containing substance-solubilized solvent is preferably a solvent that forms a solution of the intermediate (1) in which, in addition to the raw material-containing substance, the complex and/or the solid electrolyte is dissolved. The raw material-containing substance-solubilized solvent is not particularly limited as long as it has the properties as above. From the viewpoint of the solubility of the raw material-containing substance, the complex, and the solid electrolyte, the raw material-containing substance-solubilized solvent preferably contains an alcohol solvent, and more preferably is an alcohol solvent.

Specific examples of the alcohol solvent include primary and secondary aliphatic alcohols, such as methanol, ethanol, isopropanol, butanol, and 2-ethylhexyl alcohol; polyhydric alcohols, such as ethylene glycol, propylene glycol, butanediol, and hexanediol; alicyclic alcohols, such as cyclopentanol, cyclohexanol, and cyclopentylmethanol; aromatic alcohols, such as butylphenol, benzyl alcohol, phenethyl alcohol, naphthol, and diphenylmethanol; and alkoxy alcohols, such as methoxyethanol, propoxyethanol, and butoxyethanol.

As the alcohol solvent, among the above various solvents, an aliphatic alcohol is preferred, a primary aliphatic alcohol is more preferred, methanol and ethanol are further preferred, and ethanol is particularly preferred.

The amount of the raw material-containing substance-solubilized solvent used relative to 1 g of the total mass of the raw material-containing substance is, for obtaining a solid electrolyte having a sharp particle size distribution and a small median size ($D_{50}$), preferably 0.1 g or more and 50.0 g or less, more preferably 0.5 g or more and 30.0 g or less, further preferably 1.0 g or more and 25.0 g or less, and furthermore preferably 3.0 g or more and 20.0 g or less.

(Complexing agent)

The complexing agent used in the production method of this embodiment is a compound that forms a complex with the raw material-containing substance. Examples thereof include compounds that can form a complex with lithium sulfide and diphosphorus pentasulfide which are preferably used as a raw material-containing substance, $Li_3PS_4$ which is obtained when using lithium sulfide and diphosphorus pentasulfide, and a raw material-containing substance containing a halogen atom.

In particular, when the raw material-containing substance contains a halogen atom, formation of a complex through an action with a lithium atom, a sulfur atom, and a phosphorus atom, and the halogen atom is promoted, and a structure containing lithium, such as a $PS_4$ structure, or an aggregate thereof via the complexing agent, or a raw material containing lithium, such as a lithium halide, or an aggregate thereof via the complexing agent is likely to uniformly exist. Because of this, a solid electrolyte in which the halogen atom is fixed in a more dispersed state is obtained, and as a result, a high ionic conductivity is likely to be achieved.

As the complexing agent, any compound can be used with no particular limitation as long as it has the above properties, and, in particular, a preferred example thereof is a compound containing an atom having a high affinity to a lithium atom, for example, a hetero atom, such as a nitrogen atom, an oxygen atom, or a chlorine atom, and a more preferred example is a compound having a group containing such a hetero atom. This is because such a hetero atom and a group containing such a hetero atom can coordinate (bind) to lithium.

It is considered that the hetero atom present in the molecule of the complexing agent has a high affinity to lithium atom, and has a property to easily bind to the raw material-containing substance and the like to form a complex (hereinafter also referred to simply as "complex"). Thus, it is considered that a complex is formed by mixing the raw material-containing substance and the complexing agent and the state of dispersion of the raw material-containing substance, especially, the state of dispersion of the halogen atom is likely to be uniformly maintained, resulting in production of a solid electrolyte having a high ionic conductivity.

In addition, when the raw material-containing substance or the solid electrolyte (in particular, $Li_3PS_4$) forms a complex, the raw material-containing substance-solubilized solvent is less likely to come into direct contact with the raw material-containing substance and the like, and thus, occurrence of a reaction or the like between the raw material-containing substance-solubilized solvent and the raw material-containing substance is suppressed, which is preferable.

The formability of a complex of the complexing agent with the raw material-containing substance and the like can be directly confirmed, for example, by an infrared spectrum measured by FT-IR analysis (diffuse reflectance method).

In the production method of this embodiment, the complexing agent is preferably a compound containing an oxygen atom as the hetero atom.

As the compound containing an oxygen atom, a compound that has, as the group containing an oxygen atom, one or more functional groups selected from an ether group and an ester group is preferred, and among them, a compound having an ether group is particularly preferred. That is, the complexing agent containing an oxygen atom is particularly preferably an ether compound.

Examples of the ether compound include an aliphatic ether, an alicyclic ether, a heterocyclic ether, and an aromatic ether, and one compound can be used alone or two or more compounds can be used in combination.

More specific examples of the aliphatic ether include monoethers, such as dimethyl ether, diethyl ether, diisopropyl ether, dibutyl ether, and tert-butyl methyl ether; diethers, such as dimethoxymethane, dimethoxyethane, diethoxymethane, and diethoxyethane; polyethers having three or more ether groups, such as diethylene glycol dimethyl ether (diglyme) and triethylene oxide glycol dimethyl ether (triglyme); and ethers having a hydroxy group, such as diethylene glycol and triethylene glycol.

The number of carbon atoms in the aliphatic ether is preferably 2 or more, more preferably 3 or more, and further preferably 4 or more, and the upper limit is preferably 10 or less, more preferably 8 or less, and further preferably 6 or less. The number of carbon atoms of the aliphatic hydrocarbon group in the aliphatic ether is preferably 1 or more, and the upper limit is preferably 6 or less, more preferably 4 or less, and further preferably 3 or less.

Examples of the alicyclic ether include ethylene oxide, propylene oxide, tetrahydrofuran (THF), tetrahydropyran, dimethoxytetrahydrofuran, cyclopentyl methyl ether, dioxane, and dioxolane. Examples of the heterocyclic ether include furan, benzofuran, benzopyran, dioxene, dioxine, morpholine, methoxyindole, and hydroxymethyldimethoxypyridine.

As the alicyclic ether, tetrahydrofuran is preferred.

The numbers of carbon atoms of the alicyclic ether and the heterocyclic ether are preferably 3 or more, and more preferably 4 or more, and the upper limits are preferably 16 or less, and more preferably 14 or less.

Examples of the aromatic ether include methyl phenyl ether (anisole), ethyl phenyl ether, dibenzyl ether, diphenyl ether, benzyl phenyl ether, and naphthyl ether.

The number of carbon atoms of the aromatic ether is preferably 7 or more, and more preferably 8 or more, and the upper limit is preferably 16 or less, more preferably 14 or less, and further preferably 12 or less.

The ether compound used in this embodiment may be substituted with a substituent, such as an alkyl group, an alkenyl group, an alkoxyl group, a hydroxy group, or a cyano group, or a halogen atom.

Among the above ether compounds, from the viewpoint of achieving a higher ionic conductivity, an aliphatic ether or an alicyclic ether is preferred, dimethoxyethane or tetrahydrofuran is more preferred, and tetrahydrofuran is further preferred.

Examples of the ester compound include an aliphatic ester, an alicyclic ester, a heterocyclic ester, and an aromatic ester. One compound can be used alone or two or more compounds can be used in combination.

More specific examples of the aliphatic ester include formate esters, such as methyl formate, ethyl formate, and triethyl formate, acetate esters, such as methyl acetate, ethyl acetate, propyl acetate, isopropyl acetate, butyl acetate, and isobutyl acetate; propionate esters, such as methyl propionate, ethyl propionate, propyl propionate, and butyl propionate, oxalate esters, such as dimethyl oxalate and diethyl oxalate; malonate esters, such as dimethyl malonate and diethyl malonate; and succinate esters, such as dimethyl succinate and diethyl succinate.

The number of carbon atoms of aliphatic ester is preferably 2 or more, more preferably 3 or more, and further preferably 4 or more, and the upper limit is preferably 10 or less, more preferably 8 or less, and further preferably 7 or less.

The number of carbon atoms of the aliphatic hydrocarbon group in the aliphatic ester is preferably 1 or more, and more preferably 2 or more, and the upper limit is preferably 6 or less, more preferably 4 or less, and further preferably 3 or less.

Examples of the alicyclic ester include methyl cyclohexanecarboxylate, ethyl cyclohexanecarboxylate, dimethyl cyclohexanedicarboxylate, dibutyl cyclohexanedicarboxylate, and dibutyl cyclohexenedicarboxylate. Examples of the heterocyclic ester include methyl pyridinecarboxylate, ethyl pyridinecarboxylate, propyl pyridinecarboxylate, methyl pyrimidinecarboxylate, ethyl pyrimidinecarboxylate, and lactones, such as acetolactone, propiolactone, butyrolactone, and valerolactone.

The numbers of carbon atoms of the alicyclic ester and the heterocyclic ester are preferably 3 or more, and more preferably 4 or more, and the upper limits are preferably 16 or less, and more preferably 14 or less.

Examples of the aromatic ester include benzoate esters, such as methyl benzoate, ethyl benzoate, propyl benzoate, and butyl benzoate; phthalate esters, such as dimethyl phthalate, diethyl phthalate, dibutyl phthalate, butyl benzyl phthalate, and dicyclohexyl phthalate; and trimellitate esters, such as trimethyl trimellitate, triethyl trimellitate, tripropyl trimellitate, tributyl trimellitate, and trioctyl trimellitate.

The number of carbon atoms of the aromatic ester is preferably 8 or more, and more preferably 9 or more, and the upper limit is preferably 16 or less, more preferably 14 or less, and further preferably 12 or less.

The ester compound used in this embodiment may be substituted with a substituent, such as an alkyl group, an alkenyl group, an alkoxyl group, a hydroxy group, or a cyano group, or a halogen atom.

Among the ester compounds, from the viewpoint of achieving a higher ionic conductivity, an aliphatic ester is preferred, an acetate ester is more preferred, and ethyl acetate is particularly preferred.

As the hetero atom, a nitrogen atom is preferred, and as a group containing a nitrogen atom, an amino group is preferred. That is, the complexing agent preferably contains a compound having an amino group.

The amine compound which has an amino group in the molecule can promote formation of an electrolyte precursor and thus, although there is no particular limitation, the complexing agent preferably contains a compound having at least two tertiary amino groups in the molecule.

With such a structure, a structure containing lithium, such as $Li_3PS_4$ containing a $PS_4$ structure, and a raw material containing lithium, such as a lithium halide, can be bound via the at least two nitrogen atoms in the molecule, and thus, the halogen atom is fixed in a more dispersed state in an electrolyte precursor, resulting in producing a solid electrolyte having a higher ionic conductivity.

Examples of the amine compound include amine compounds, such as an aliphatic amine, an alicyclic amine, a heterocyclic amine, and an aromatic amine, and one compound can be used alone or two or more compounds can be used in combination.

More specifically, typical preferred examples of the aliphatic amine include aliphatic primary diamines, such as ethylenediamine, diaminopropane, and diaminobutane; aliphatic secondary diamines, such as N,N'-dimethylethylenediamine, N,N'-diethylethylenediamine, N,N'-dimethyldiaminopropane, and N,N'-diethyldiaminopropane; and aliphatic tertiary diamines, such as N,N,N',N'-tetramethyldiaminomethane, N,N,N',N'-tetramethylethylenediamine, N,N,N',N'-tetraethylethylenediamine, N,N,N',N'-tetramethyldiaminopropane, N,N,N',N'-tetraethyldiaminopropane, N,N,N',N'-tetramethyldiaminobutane, N,N,N',N'-tetramethyldiaminopentane, and N,N,N',N'-tetramethyldiaminohexane. Here, in the examples in the present description, for example, diaminobutane encompasses, unless otherwise specified, isomers regarding the position of the amino group, such as 1,2-diaminobutane, 1,3-diaminobutane, and 1,4-diaminobutane, linear and branched isomers and the like with respect to butane, and all other isomers.

The number of carbon atoms of the aliphatic amine is preferably 2 or more, more preferably 4 or more, and further preferably 6 or more, and the upper limit is preferably 10 or less, more preferably 8 or less, and further preferably 7 or less. The number of carbon atoms of the hydrocarbon group of the aliphatic hydrocarbon group in the aliphatic amine is preferably 2 or more, and the upper limit is preferably 6 or less, more preferably 4 or less, and further preferably 3 or less.

Typical preferred examples of the alicyclic amine include alicyclic diamines, for example, alicyclic primary diamines, such as cyclopropanediamine and cyclohexanediamine; an alicyclic secondary diamine, such as bisaminomethylcyclohexane; and alicyclic tertiary diamines, such as N,N,N',N'-tetramethyl-cyclohexane diamine and bis(ethylmethylamino)cyclohexane. Typical preferred examples of the heterocyclic amine include heterocyclic diamines, for example, a heterocyclic primary diamine, such as isophoronediamine; heterocyclic secondary diamines, such as piperazine and dipiperidylpropane; and heterocyclic tertiary diamines, such as N,N-dimethylpiperazine and bismethylpiperidylpropane.

The numbers of carbon atoms of the alicyclic amine and the heterocyclic amine are preferably 3 or more, and more preferably 4 or more, and the upper limits are preferably 16 or less, and more preferably 14 or less.

Typical preferred examples of the aromatic amine include aromatic diamines, for example, aromatic primary diamines, such as phenyldiamine, tolylenediamine, and naphthalenediamine; aromatic secondary diamines, such as N-methylphenylenediamine, N,N'-dimethylphenylenediamine, N,N'-bismethylphenylphenylenediamine, N,N'-dimethylnaphthalenediamine, and N-naphthylethylenediamine; and aromatic tertiary diamines, such as N,N-dimethylphenylenediamine, N,N,N',N'-tetramethylphenylenediamine, N,N,N',N'-tetramethyldiaminodiphenylmethane, and N,N,N',N'-tetramethylnaphthalenediamine.

The number of carbon atoms of the aromatic amine is preferably 6 or more, more preferably 7 or more, and further preferably 8 or more, and the upper limit is preferably 16 or less, more preferably 14 or less, further preferably 12 or less.

The amine compound used in this embodiment may be substituted with a substituent, such as an alkyl group, an alkenyl group, an alkoxyl group, a hydroxy group, or a cyano group, or a halogen atom.

Although the diamines are mentioned as specific examples, amine compounds that can be used in this embodiment are naturally not limited to diamines, and trimethylamine, triethylamine, ethyldimethylamine, and aliphatic monoamines corresponding to various diamines, such as the aforementioned aliphatic diamines; piperidine compounds, such as piperidine, methyl piperidine, and tetramethylpiperidine; pyridine compounds, such as pyridine and picoline, morpholine compounds, such as morpholine, methylmorpholine, and thiomorpholine; imidazole compounds, such as imidazole and methylimidazole; alicyclic monoamines, such as monoamines corresponding to the aforementioned alicyclic diamines; heterocyclic monoamines corresponding to the aforementioned heterocyclic diamines; monoamines, such as aromatic monoamines corresponding to the aforementioned aromatic diamines; and polyamines having three or more amino groups, such as diethylenetriamine, N,N',N''-trimethyldiethylenetriamine, N,N,N',N'',N''-pentamethyldiethylenetriamine, triethylenetetramine, N,N'-bis[(dimethylamino)ethyl]-N,N'-dimethylethylenediamine, hexamethylenetetramine, and tetraethylenepentamine, can also be used.

Among the above compounds, from the viewpoint of achieving a higher ionic conductivity, a tertiary amine having a tertiary amino group as an amino group is preferred, a tertiary diamine having two tertiary amino groups is more preferred, a tertiary diamine having two tertiary amino groups at both the terminals is further preferred, and an aliphatic tertiary diamine having a tertiary amino group at both the terminals is furthermore preferred. In the amine compound, as the aliphatic tertiary diamine having a tertiary amino group at both the terminals, tetramethylethylenediamine, tetraethylethylenediamine, tetramethyldiaminopropane, and tetraethyldiaminopropane are preferred, and in view of the availability and the like, tetramethylethylenediamine and tetramethyldiaminopropane are preferred.

The amount of the complexing agent used relative to 1 g of the total mass of the raw material-containing substance is, for obtaining a solid electrolyte having a sharp particle size distribution and a small median size ($D_{50}$), preferably 0.1 g or more and 50.0 g or less, more preferably 0.5 g or more and 30.0 g or less, further preferably 1.0 g or more and 20.0 g or less, and furthermore preferably 3.0 g or more and 10.0 g or less.

(Nonpolar solvent)

The nonpolar solvent used in the production method of this embodiment is preferably a solvent that hardly dissolve the raw material-containing substance and the solid electrolyte, specifically, is not such a solvent containing a hetero atom that is mentioned above as a preferred example of the complexing agent and the raw material-containing substance-solubilized solvent, but a hydrocarbon solvent containing no hetero atom. When a nonpolar solvent is used, the amount of the complexing agent or the raw material-containing substance-solubilized solvent used can be reduced, which is preferable. Examples of the nonpolar solvent include aliphatic hydrocarbon solvents, such as pentane, hexane, 2-ethylhexane, heptane, octane, decane, undecane, dodecane, and tridecane; alicyclic hydrocarbon solvents, such as cyclohexane, methylcyclohexane, and ethylcyclohexane; and aromatic hydrocarbon solvents, such as benzene, toluene, xylene, mesitylene, ethylbenzene, and tert-butylbenzene, and one appropriately selected therefrom can be used.

Among these solvents, an aliphatic hydrocarbon solvent, an alicyclic hydrocarbon solvent, and an aromatic hydrocarbon solvent are preferred, and an aromatic hydrocarbon solvent is more preferred. More specifically, 2-ethylhexane, heptane, octane, cyclohexane, methylcyclohexane, benzene, toluene, xylene, or mesitylene is preferred, methylcyclohexane, benzene, toluene, or xylene is more preferred, and toluene is further preferred.

One of the solvents may be used alone or two or more thereof may be used in combination.

The amount of the nonpolar solvent used relative to 1 g of the total mass of the raw material-containing substance is, for obtaining a solid electrolyte having a sharp particle size distribution and a small median size ($D_{50}$), preferably 0.1 g or more and 50.0 g or less, more preferably 0.5 g or more and 30.0 g or less, further preferably 1.0 g or more and 20.0 g or less, and furthermore preferably 3.0 g or more and 10.0 g or less.

(Heating)

It is also preferred that the method for producing a solid electrolyte of this embodiment further includes heating. Heating can be performed, preferably after mixing the solid electrolyte, more preferably after spraying the intermediate (1) solution. Although heating in spraying the intermediate (1) solution using a spray drying apparatus as described above is preferred, depending on the heating temperature herein, removal of the complexing agent in the complex may be insufficient, or the crystal contained in the solid electrolyte may be not sufficiently grown. In such a case, it is preferred that heating is further included. In other words, it is preferred that the production method includes heating the complex to produce an amorphous solid electrolyte to be described later, and heating the complex or the amorphous solid electrolyte to thereby produce a crystalline solid electrolyte to be described later.

When the production method includes heating the complex, the complexing agent, the solvent, and the like in the complex are removed, and an amorphous solid electrolyte and/or a crystalline solid electrolyte containing a lithium atom, a sulfur atom, a phosphorus atom, and a halogen atom can be obtained.

In addition, by heating the crystalline solid electrolyte, the crystallite diameter can be increased which also results in a high ionic conductivity, which is preferable.

Here, the removal of the complexing agent in the complex is supported by the fact that results of an X-ray diffraction pattern and a gas chromatography analysis reveal that the complexing agent constitutes a co-crystal of a precursor and the fact that a solid electrolyte obtained by heating the complex to remove the complexing agent gives the same X-ray diffraction pattern as a solid electrolyte obtained by a conventional method without any complexing agent.

In the production method of this embodiment, a solid electrolyte is obtained by heating the complex to remove the complexing agent in the complex. In the solid electrolyte, a smaller amount of the complexing agent is preferred more, but the complexing agent may be contained to the extent that the performance of the solid electrolyte is not impaired. The content of the complexing agent in the solid electrolyte may generally be any of 10% by mass or less, is preferably 5% by mass or less, more preferably 3% by mass or less, and further preferably 1% by mass or less. Since a smaller content is preferred more, the lower limit is not particularly limited.

In the production method of this embodiment, the crystalline solid electrolyte may be obtained by heating the complex, or may be obtained by heating the complex to obtain an amorphous solid electrolyte, and then, heating the amorphous solid electrolyte.

In the method for producing a solid electrolyte of this embodiment, whether an amorphous solid electrolyte is to be obtained or a crystalline solid electrolyte is to be obtained, and whether a crystalline solid electrolyte is to be obtained after obtaining an amorphous solid electrolyte or a crystalline solid electrolyte is to be directly obtained from a complex are appropriately selected according to the demand, and can be adjusted by the heating temperature, the heating time, and the like.

The heating temperature of the complex, for example, in the case of obtaining an amorphous solid electrolyte, may be determined according to the structure of the crystalline solid electrolyte obtained by heating the amorphous solid electrolyte (or complex), and specifically, is determined as follows. The amorphous solid electrolyte (or complex) is subjected to differential thermal analysis (DTA) at a temperature rising condition of 10 degrees/minute with a differential thermal analyzer (DTA apparatus). Then, the heating temperature can be determined, based on the peak top temperature of the exothermic peak observed on the lowermost temperature side, in the range of the peak top temperature minus preferably 5 degrees or lower, more preferably 10 degrees or lower, and further preferably 20 degrees or lower. The lower limit is not particularly limited, but can be set to, for example, the peak top temperature of the exothermic peak observed on the lowermost temperature side minus approximately 40 degrees or higher. By setting the heating temperature in such a temperature range, an amorphous solid electrolyte can be more efficiently and securely obtained.

The heating temperature for obtaining an amorphous solid electrolyte cannot be completely defined because it varies depending on the structure of the crystalline solid electrolyte obtained, but the heating temperature is generally preferably 250°C or lower, more preferably 220°C or lower, and further preferably 200°C or lower, and the lower limit is not particularly limited, but is preferably 90°C or higher, more preferably 100°C or higher, and further preferably 110°C or higher.

The heating is preferably performed under a reduced pressure, and from the viewpoint regarding the apparatus, is preferably 0.1 Pa or more, more preferably 1.0 Pa or more, and further preferably 5.0 Pa or more, and from the viewpoint of obtaining a solid electrolyte having a high ionic conductivity, is preferably 100.0 Pa or less, more preferably 50.0 Pa or less, and further preferably 20.0 Pa or less.

When a crystalline solid electrolyte is obtained by heating an amorphous solid electrolyte or a crystalline solid electrolyte is directly obtained from a complex, the heating temperature can be determined according to the structure of the crystalline solid electrolyte, and is preferably higher than the heating temperature for obtaining an amorphous solid electrolyte. Specifically, the heating temperature can be determined as follows. The amorphous solid electrolyte (or complex) is subjected to differential thermal analysis (DTA) at a temperature rising condition of 10 degrees/minute with a differential thermal analyzer (DTA apparatus). Then, the heating temperature can be determined, based on the peak top temperature of the exothermic peak observed on the lowermost temperature side, in the range of the peak top temperature plus preferably 5 degrees or higher, more preferably 10 degrees or higher, and further preferably 20 degrees or higher, and the upper limit is not particularly limited, but can be set to, for example, the peak top temperature plus approximately 40 degrees or lower. By setting the heating temperature in such a temperature range, a crystalline solid electrolyte can be more efficiently and securely obtained. The heating temperature for obtaining a crystalline solid electrolyte cannot be completely defined because it varies depending on the structure of the crystalline solid electrolyte obtained, but is generally preferably 200°C or higher, more preferably 300°C or higher, and further preferably 350°C or higher, and the upper limit is not particularly limited, and preferably 600°C or lower, more preferably 500°C or lower, and further preferably 450°C or lower.

The heating time is not particularly limited as long as it is a time in which a desired amorphous solid electrolyte or crystalline solid electrolyte can be obtained, and, for example, is preferably 1 minute or more, more preferably 10 minutes or more, further preferably 30 minutes or more, and furthermore preferably 1 hour or more. The upper limit of the heating time is not particularly limited, but is preferably 24 hours or less, more preferably 20 hours or less, further preferably 15 hours or less, and furthermore preferably 10 hours or less.

The heating is preferably performed in an inert gas atmosphere (for example, nitrogen atmosphere, argon atmosphere) or under a reduced-pressure atmosphere (in particular, in vacuum). This is because degradation (for example, oxidation) of the crystalline solid electrolyte can be prevented. The method for heating is not particularly limited, and examples thereof include methods using a hot plate, a vacuum heater, an argon gas atmosphere furnace, and a firing furnace. Industrially, a horizontal dryer, a horizontal vibrating fluid dryer, or the like having a heating means and a feeding mechanism can be used, and can be selected according to the amount to be treated by heating.

(Pulverization)

The method for producing a solid electrolyte of this embodiment may further include pulverizing the solid electrolyte. Since the solvent is removed from the intermediate (1) using a spray drying apparatus under specific conditions, the particle size of the produced solid electrolyte is controlled. Thus, for enhancing the productivity, it is preferred that further pulverizing the solid electrolyte is not performed after spraying the intermediate (1) solution.

When pulverization is performed, the aforementioned pulverizers can be used.

[Solid electrolyte]

The solid electrolyte of this embodiment has a median size ($D_{50}$) of 1.0 $\mu$m or more and less than 9.0 $\mu$m, and a particle size distribution (($D_{90}$-$D_{10}$)/$D_{50}$) based on the median size ($D_{50}$), the particle size at a cumulative volume of 10% ($D_{10}$), and the particle size at a cumulative volume of 90% ($D_{90}$) of 2.50 or less. As described above, the solid electrolyte of this embodiment is not particular limited on a method of producing the solid electrolyte. For example, the solid electrolyte of this embodiment can be easily produced by the method for producing a solid electrolyte of this embodiment. The solid electrolyte of this embodiment is one having the aforementioned prescribed median size and particle size distribution, among solid electrolytes obtained by the production method of this embodiment.

The median size ($D_{50}$) of the solid electrolyte of this embodiment is 1.0 $\mu$m or more and less than 9.0 $\mu$m, and from the viewpoint of easy formation of a contact interface between an electrode active material and the solid electrolyte, leading to good ionic and electronic conduction paths, the upper limit is preferably 8.9 $\mu$m or less, more preferably 8.0 $\mu$m or less, further preferably 7.0 $\mu$m or less, and furthermore preferably 6.5 $\mu$m or less. The lower limit is not particularly limited as long as it is 1.0 $\mu$m or more, but, for example, when the solid electrolyte is produced by the production method of this embodiment, from the viewpoint of the performance of the spray drying apparatus and the productivity, is preferably 1.5 $\mu$m or more, more preferably 2.0 $\mu$m or more, and further preferably 3.0 $\mu$m or more.

The particle size at a cumulative volume of 10% ($D_{10}$) of the solid electrolyte of this embodiment is preferably 0.05 $\mu$m or more and 10.0 $\mu$m or less, more preferably 0.50 $\mu$m or more and 6.0 $\mu$m or less, and further preferably 1.0 $\mu$m or more and 4.0 $\mu$m or less.

The particle size at a cumulative volume of 90% ($D_{90}$) of particulate solid electrolyte is preferably 0.10 $\mu$m or more and 20.0 $\mu$m or less, more preferably 1.0 $\mu$m or more and 15.0 $\mu$m or less, and further preferably 3.0 $\mu$m or more and 10.0 $\mu$m or less.

The particle size distribution ($D_{90}$-$D_{10}$)/$D_{50}$ of the solid electrolyte of this embodiment is 2.50 or less, and from the viewpoint of easy formation of a contact interface between an electrode active material and the solid electrolyte, leading to good ionic and electronic conduction paths, the upper limit is preferably 2.25 or less, more preferably 2.00 or less, further preferably 1.50 or less, and furthermore preferably 1.25 or less. The lower limit is not particularly limited, but from the viewpoint of the performance of the spray drying apparatus and the productivity, can be 0.01 or more, and preferably 0.1 or more.

The specific surface area of the solid electrolyte of this embodiment is preferably 15 cm$^2$/g or more. When the solid electrolyte has a high specific surface area, the solid electrolyte is likely to be densely filled when formed into a battery, and thus, a superior battery performance is likely to be achieved. A more preferred specific surface area is in the same range as that of the specific surface area that a solid electrolyte obtained by the production method of this embodiment can have.

For the solid electrolyte of this embodiment, properties other than the median size and the particle size distribution, for example, the capability of forming an amorphous solid electrolyte and a crystalline solid electrolyte, and the atoms that constitute the solid electrolyte, the ratio of the atoms, and other configurations are the same as those described for a solid electrolyte obtained by the method for producing a solid electrolyte of this embodiment.

When the solid electrolyte of this embodiment is a crystalline solid electrolyte, as the crystal structure, the solid electrolyte preferably has a thio-LISICON Region II-type crystal structure or an argyrodite-type crystal structure, and more preferably has an argyrodite-type crystal structure. The crystal structure is the same as that described for a solid electrolyte obtained by the method for producing a solid electrolyte of this embodiment.

Examples

Next, the present invention is specifically described with reference to Examples, but the present invention is not to be limited to the examples.

(1) Measurement method

(1-1) Measurement of median size ($D_{50}$) and particle sizes at 10% and 90% of cumulative distribution ($D_{10}$) ($D_{90}$)

The median size based on the volume was measured using a laser diffraction/scattering particle size distribution analyzer ("Partica LA-950V2 model LA-950W2", manufactured by HORIBA, Ltd.). Toluene (manufactured by Wako Pure Chemical Industries, Ltd., special grade) and t-butyl alcohol (manufactured by Wako Pure Chemical Industries, Ltd., special grade) which were dehydrated were mixed at a ratio of 93.8:6.2 by weight and the mixture was used as a dispersion medium. Into a flow cell of the analyzer, 50 ml of the dispersion medium was injected and circulated, and then, an object to be measured was put therein and was subjected to an ultrasonic treatment, followed by measurement of the particle size distribution. The amount of the measured object put was adjusted so that the red light transmission (R) corresponding to the particle concentration was within 70 to 90% and the blue light transmission (B) was within 80 to 90% in a measurement screen defined in the analyzer. As the conditions of the arithmetic operation, a refractive index of the measured object of 2.16 and a refractive index of the dispersion medium of 1.49 were used. In setting of the dispersion mode, a particle size arithmetic operation was conducted with the number of iterations fixed to 15, thereby determining the median size ($D_{50}$). The particle size at 10% ($D_{10}$) and the particle size at 90% ($D_{90}$) of the cumulative distribution were also determined, thereby calculating the particle size distribution (($D_{90}$-$D_{10}$)/$D_{50}$).

(1-2) Measurement of ionic conductivity

In Examples herein, the ionic conductivity was measured as follows.
Each solid electrolyte was molded into a circular palette having a diameter of 10 mm (sectional area S: 0.785 cm$^2$) and a height (L) of 0.1 to 0.3 cm to produce a sample. Electrode terminals were attached to the sample from above and below, and measurement was performed by an alternating current impedance method at 25°C (frequency range: 1 MHz to 100 Hz, amplitude: 10 mV) to provide a Cole-Cole plot. The real part Z' ($\Omega$) at the point at which -Z" ($\Omega$) became the minimum near the right end of an arc observed in a region on the high frequency side was designated as the bulk resistance R ($\Omega$) of the electrolyte, and the ionic conductivity $\sigma$ (S/cm) was calculated according to the following expressions.

$$R=\rho(L/S)$$

$$\sigma=1/\rho$$

(1-3) Measurement of specific surface area

In Examples herein, the specific surface area was measured by the BET method based on the Krypton (Kr) adsorption using a gas adsorption amount measuring apparatus.

(Example 1)

In an anaerobic globe box, as a raw material-containing substance, 122.20 g of Li$_2$S, 155.61 g of P$_2$S$_5$, 72.94 g of LiCl, and 59.33 g of LiBr were weighed into a separable flask equipped with a stirrer and a condenser, and 1820 g of toluene as a nonpolar solvent and 1864 g of tetrahydrofuran (THF) as a complexing agent were added thereto (toluene and THF were added so as to give a slurry containing 10% by mass of the raw material-containing substance), and the mixture was stirred at room temperature for 166 hours to produce an intermediate (1-1) in a slurry form.
Then, into the separable flask which contained the intermediate (1-1), 3313 g of ethanol as a raw material-containing substance-solubilized solvent was added (by adding ethanol, the mass of the raw material-containing substance used in the solution was made 5% by mass), and stirring was continued to prepare a solution (intermediate (1-2)). After confirming the formation of the solution, the intermediate (1-2) solution was subjected to a spray drying apparatus (manufactured by OHKAWARA KAKOHKI CO.,LTD., apparatus name: CNL-3) at a spraying pressure of 0.30 MPa, a dry inlet temperature of 200°C, and a solution injection rate of 20 g/minute to dry the solvent, thereby producing a solid electrolyte (1).

The median size of the solid electrolyte (1) was shown in Table 1.

It was found from an XRD pattern that the solid electrolyte (1) was a solid electrolyte containing an argyrodite crystal structure.

The solid electrolyte (1) was heated in nitrogen atmosphere at 430°C for 8 hours. Using the obtained solid electrolyte, the ionic conductivity was measured by the ionic conductivity measurement method. For the solid electrolyte obtained by heating, the median size, the particle size at 10% ($D_{10}$) and the particle size at 90% ($D_{90}$) of the cumulative distribution, and the specific surface area were measured by the aforementioned methods. The results were shown in Table 1. Table 1 also shows the particle size distribution (($D_{90}$-$D_{10}$)/$D_{50}$) calculated with the median size, and the particle size at 10% ($D_{10}$) and the particle size at 90% ($D_{90}$) of the cumulative distribution, determined by the above measurement.

(Example 2)

An intermediate (1-3), an intermediate (1-4), and a solid electrolyte (2) were produced in the same manner as in Example 1 except for chancing the spraying pressure to 0.05 MPa.

It was found from an XRD pattern that the solid electrolyte (2) was a solid electrolyte containing an argyrodite crystal structure. The median size of the solid electrolyte (2) was shown in Table 1.

The solid electrolyte (2) was heated in nitrogen atmosphere at 430°C for 8 hours. Using the obtained solid electrolyte, the ionic conductivity was measured by the aforementioned ionic conductivity measurement method. For the solid electrolyte obtained by heating, the median size, the particle size at 10% ($D_{10}$) and the particle size at 90% ($D_{90}$) of the cumulative distribution, and the specific surface area were measured by the aforementioned methods. The results were shown in Table 1. Table 1 also shows the particle size distribution (($D_{90}$-$D_{10}$)/$D_{50}$) calculated with the median size, and the particle size at 10% ($D_{10}$) and the particle size at 90% ($D_{90}$) of the cumulative distribution, determined by the above measurement.

(Comparative Example 1)

The intermediate (1-2) obtained in Example 1 was subjected to decantation to separate the solid component. Toluene was added to the separated solid component, which was subjected to decantation again to separate the solid components. This washing operation was performed three times. Subsequently, the obtained solid component was transferred into a flask and was subjected to vacuum drying at 200°C for 3 hours to collect the solid component (solid electrolyte (C1)).

The median size of the solid electrolyte (C1) was shown in Table 1.

The solid electrolyte (C1) was heated in nitrogen atmosphere at 430°C for 8 hours. It was found from an XRD pattern that the solid electrolyte (C1) was a solid electrolyte containing an argyrodite crystal structure. Using the obtained solid electrolyte, the ionic conductivity was measured by the aforementioned ionic conductivity measurement method. For the solid electrolyte obtained by heating, the median size, the particle size at 10% ($D_{10}$) and the particle size at 90% ($D_{90}$) of the cumulative distribution, and the specific surface area were measured by the aforementioned methods. The results were shown in Table 1. Table 1 also shows the particle size distribution (($D_{90}$-$D_{10}$)/$D_{50}$) calculated with the median size, and the particle size at 10% ($D_{10}$) and the particle size at 90% ($D_{90}$) of the cumulative distribution, determined by the above measurement.

(Comparative Example 2)

In an anaerobic globe box, as a raw material-containing substance, 122.20 g of $Li_2S$, 155.61 g of $P_2S_5$, 72.94 g of LiCl, and 59.33 g of LiBr were weighed into a separable flask equipped with a stirrer and a condenser, and with stirring, 8232 g of pyridine was added thereto under ice cooling. The temperature was returned to normal temperature and after 20 hours, was heated to 80°C to perform a reaction for 5 hours, thereby obtaining a slurry containing an intermediate (C2).

The slurry containing the intermediate (C2) was sprayed using a spray drying apparatus under the same conditions as in Example 1 except for changing the intermediate (1-2) solution to the slurry containing the intermediate (C2) and changing the spraying pressure to 0.6 MPa, thereby obtaining a solid electrolyte (C2).

It was found from an XRD pattern that the solid electrolyte (C2) was a solid electrolyte containing an argyrodite crystal structure. The median size of the solid electrolyte (2) was shown in Table 1.

The solid electrolyte (C2) was heated in nitrogen atmosphere at 430°C for 8 hours. For the solid electrolyte obtained by heating, the median size, the particle size at 10% ($D_{10}$) and the particle size at 90% ($D_{90}$) of the cumulative

distribution, and the specific surface area were measured by the aforementioned methods. Using the obtained solid electrolyte, the ionic conductivity was measured by the aforementioned ionic conductivity measurement method. The results were shown in Table 1. Table 1 also shows the particle size distribution ($(D_{90}-D_{10})/D_{50}$) calculated with the median size, and the particle size at 10% ($D_{10}$) and the particle size at 90% ($D_{90}$) of the cumulative distribution, determined by the above measurement.

The median sizes and the ionic conductivities of the solid electrolyte (1), solid electrolyte (2), solid electrolyte (C1), and solid electrolyte (C2) obtained were as shown in the following Table.

Table 1

|  |  | Solid electrolyte | | | |
|---|---|---|---|---|---|
|  |  | (1) | (2) | (C1) | (C2) |
| $D_{50}$ (before heating) | $\mu$m | 3.5 | 6.0 | 188.0 | 9.0 |
| $D_{50}$ (after heating) | $\mu$m | 4.9 | 6.3 | 13.5 | - |
| $D_{10}$ (after heating) | $\mu$m | 2.7 | 4.0 | 2.7 | - |
| $D_{90}$ (after heating) | $\mu$m | 8.5 | 9.5 | 47.4 | - |
| $(D_{90}-D_{10})/D_{50}$ (after heating) | - | 1.17 | 0.87 | 3.32 | - |
| Ionic conductivity | mS/cm | 4.9 | 5.4 | 2.2 | 2.0 |
| Specific surface area | cm$^2$/g | 19 | - | - | - |

The solid electrolyte (1) and solid electrolyte (2) produced had a small median size ($D_{50}$) and a small, i.e., sharp particle size distribution, and a superior ionic conductivity of 4.9 and 5.4 mS/cm. In addition, it is considered that, since the specific surface area is as large as 19 cm$^2$/g and thus, the solid electrolytes (1) and (2) are likely to be densely filled when formed into a battery, a superior battery performance is likely to be achieved. Furthermore, it was found that the solid electrolytes were also superior in productivity as described in Examples 1 and 2.

In contrast, it was found that, in the solid electrolyte (C1) produced in Comparative Example 1, unlike in the case of using a spray drying apparatus in which small liquid drops were formed and the solvent is immediately dried, since the solid electrolyte was heated in a flask and was dried in vacuum, the dried particles underwent size enlargement to increase the median size ($D_{50}$).

The particle size distributions of the solid electrolyte (1), solid electrolyte (2), and solid electrolyte (C1) were shown in Fig. 2. As can be seen from Fig. 2, it was found that, as compared with the solid electrolyte (1) and the solid electrolyte (2), the solid electrolyte (C1) had a particle size distribution that was multimodal and was not sharp. This point can be grasped also by the fact that the solid electrolyte (C1) has a particle size distribution ($(D_{90}-D_{10})/D_{50}$) of 3.32, which is larger than 1.17 and 0.87 which are those of the solid electrolytes (1) and (2). As shown in Table 1, the ionic conductivity was also inferior. Such a decrease in the ionic conductivity is considered because, in drying in a flask, unlike in drying with a spray drying apparatus, the uniformity regarding the distribution of each element that formed the solid electrolyte in the solid electrolyte was disturbed to decrease the content of the argyrodite crystal structure. The decrease in the content of the argyrodite crystal structure is considered to be caused by ununiformity of a halogen element in the solid electrolyte, which led to production of a large amount of an impurity which was a solid solution containing the halogen element.

For the solid electrolyte (C2) produced in Comparative Example 2, not an intermediate solution but a slurry was sprayed using a spray drying apparatus, and the median size ($D_{50}$) of the resulting solid electrolyte was large as shown in Table 1. It is considered that the median size ($D_{50}$) of the produced solid electrolyte was increased because, in the case of spraying a slurry, the particle size of the sprayed liquid drops cannot be controlled and the particle size of the solid component in the slurry also cannot be controlled. The solid electrolytes (1) and (2) gave a result of a superior ionic conductivity as compared with the solid electrolyte (C2). This is considered because, by using a solution like in Examples 1 and 2, the distribution of atoms that form the solid electrolyte in the solid electrolyte becomes uniform. In other words, it is considered that, when a slurry is sprayed, the distribution of atoms in the solid electrolyte is ununiform, and thus, even when the same raw materials were used in the same ratio as in the Examples, the same level of ionic conductivity as in the Examples could not be achieved.

Industrial Availability

According to the method for producing a solid electrolyte of this embodiment, it is possible to easily produce a solid electrolyte having a sharp particle size distribution and a small median size ($D_{50}$).

A solid electrolyte obtained by the production method of this embodiment or the solid electrolyte of this embodiment is suitably used in a lithium ion battery, especially, a lithium ion battery used in information-related devices, communication devices, and so on, such as personal computers, video cameras, and mobile phones.

**Claims**

1. A method for producing a solid electrolyte, the method comprising

   mixing a raw material-containing substance that contains a lithium atom, a phosphorus atom, and a sulfur atom with a solvent to prepare a solution of an intermediate (1), and
   spraying the intermediate (1) solution using a spray drying apparatus at a spraying pressure of the spray drying apparatus of 0.01 MPa or more.

2. The method for producing a solid electrolyte according to claim 1, wherein the spraying pressure is 0.05 MPa or more.

3. A method for producing a solid electrolyte, the method comprising

   mixing a raw material-containing substance that contains a lithium atom, a phosphorus atom, and a sulfur atom with a solvent to prepare a solution of an intermediate (1), and
   spraying the intermediate (1) solution using a spray drying apparatus.

4. The method for producing a solid electrolyte according to any one of claims 1 to 3, wherein the solid electrolyte has a median size ($D_{50}$) of less than 9.0 $\mu$m.

5. The method for producing a solid electrolyte according to any one of claims 1 to 4, wherein the intermediate (1) has a temperature of 350°C or lower at a spray port of the spray drying apparatus.

6. The method for producing a solid electrolyte according to any one of claims 1 to 5, wherein further pulverizing the solid electrolyte is not performed.

7. The method for producing a solid electrolyte according to any one of claims 1 to 6, wherein the raw material-containing substance further contains a halogen atom.

8. The method for producing a solid electrolyte according to any one of claims 1 to 7, wherein the solvent comprises at least one selected from a complexing agent and a raw material-containing substance-solubilized solvent.

9. The method for producing a solid electrolyte according to claim 8, wherein the solvent comprises a raw material-containing substance-solubilized solvent.

10. The method for producing a solid electrolyte according to claim 8 or 9, wherein the solvent comprises a complexing agent.

11. The method for producing a solid electrolyte according to any one of claims 8 to 10, wherein the raw material-containing substance-solubilized solvent comprises an alcohol solvent.

12. The method for producing a solid electrolyte according to any one of claims 8 to 11, wherein the solvent further comprises a nonpolar solvent.

13. The method for producing a solid electrolyte according to any one of claims 8 to 12, wherein the raw material-containing substance and a solvent containing a complexing agent are mixed, and then, a solvent containing the raw material-containing substance-solubilized solvent is added and mixed.

14. A solid electrolyte having a median size ($D_{50}$) of 1.0 $\mu$m or more and less than 9.0 $\mu$m and a particle size distribution (($D_{90}$-$D_{10}$)/$D_{50}$) based on the median size ($D_{50}$), a particle size at a cumulative volume of 10% ($D_{10}$), and a particle size at a cumulative volume of 90% ($D_{90}$) of 2.50 or less.

15. The solid electrolyte according to claim 14, wherein the solid electrolyte has a specific surface area of 15 $cm^2$/g or more.

**16.** The solid electrolyte according to claim 14 or 15, the solid electrolyte has an argyrodite-type crystal structure.

[Fig. 1]

Lithium atom ⎫
Phosphorus atom ⎬ Raw material-containing substance
Sulfur atom ⎭

\+ Solvent

Mixing → Intermediate (1)

Drying →
Spray drying apparatus  Solid electrolyte

[Fig. 2]

Solid electrolyte (2)

Solid electrolyte (1)

Solid electrolyte (C1)

Frequency (%) vs Particle size (µm)

## INTERNATIONAL SEARCH REPORT

| | International application No. |
|---|---|
| | **PCT/JP2023/026953** |

| A. | CLASSIFICATION OF SUBJECT MATTER |
|---|---|

*H01B 13/00*(2006.01)i; *C01B 25/14*(2006.01)i; *H01M 10/0562*(2010.01)i
FI:    H01B13/00 Z; H01M10/0562; C01B25/14

According to International Patent Classification (IPC) or to both national classification and IPC

| B. | FIELDS SEARCHED |
|---|---|

Minimum documentation searched (classification system followed by classification symbols)

H01B13/00; C01B25/14; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021/230189 A1 (IDEMITSU KOSAN CO., LTD.) 18 November 2021 (2021-11-18) paragraphs [0041], [0046], [0065], [0121]-[0123], fig. 4 | 3-12 |
| Y | | 1-2, 13 |
| Y | JP 2021-48037 A (TAIHEIYO CEMENT CORP) 25 March 2021 (2021-03-25) paragraph [0083] | 1-2 |
| Y | WO 2015/133594 A1 (TORAY INDUSTRIES, INC.) 11 September 2015 (2015-09-11) paragraph [0209] | 1-2 |
| Y | JP 2020-27781 A (MITSUBISHI GAS CHEMICAL CO) 20 February 2020 (2020-02-20) paragraphs [0016], [0036] | 13 |
| X | JP 2020-187897 A (TAIYO YUDEN KK) 19 November 2020 (2020-11-19) paragraph [0053] | 14-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/026953**

| Patent document cited in search report | | | Publication date (day/month/year) | Patent family member(s) | Publication date (day/month/year) |
|---|---|---|---|---|---|
| WO | 2021/230189 | A1 | 18 November 2021 | EP 4152464 A1 paragraphs [0055], [0060], [0085], [0162]-[0166], fig. 4 CN 115552553 A KR 10-2023-0008725 A | |
| JP | 2021-48037 | A | 25 March 2021 | (Family: none) | |
| WO | 2015/133594 | A1 | 11 September 2015 | US 2017/0018793 A1 paragraph [0229] EP 3116055 A1 CN 106104888 A KR 10-2016-0130427 A | |
| JP | 2020-27781 | A | 20 February 2020 | (Family: none) | |
| JP | 2020-187897 | A | 19 November 2020 | US 2020/0365937 A1 paragraphs [0044]-[0046] CN 111934000 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017018872 A
- JP 2019169459 A
- JP 2013016423 A

**Non-patent literature cited in the description**

- **KANNO et al.** *Journal of The Electrochemical Society*, 2001, vol. 148 (7), A742-746
- *Solid State Ionics*, 2006, vol. 177, 2721-2725